# EUROPEAN PATENT SPECIFICATION

(11) **EP 3 734 596 B1**
(45) Date of publication and mention of the grant of the patent: **14.12.2022**
(21) Application number: 20168960.1
(22) Date of filing: 09.04.2020
(51) Int. Cl.: G10L 15/22, G10L 15/30

(54) **DETERMINING TARGET DEVICE BASED ON SPEECH INPUT OF USER AND CONTROLLING TARGET DEVICE**
BESTIMMUNG EINER ZIELVORRICHTUNG BASIEREND AUF EINER SPRACHEINGABE EINES BENUTZERS UND STEUERUNG DER ZIELVORRICHTUNG
DÉTERMINATION D'UN DISPOSITIF CIBLE SUR LA BASE DE LA VOIX DE L'UTILISATEUR ET CONTRÔLE DU DISPOSITIF CIBLE

(30) Priority: 02.05.2019 KR 20190051824; 17.06.2019 US 201962862201 P; 30.07.2019 KR 20190092641
(43) Date of publication of application: 04.11.2020
(60) Divisional application: 22205263.1
(73) Proprietor: Samsung Electronics Co., Ltd., Gyeonggi-do 16677 (KR)
(72) Inventor: Ko, Hyeonmok, 16677 Suwon-si, Gyeonggi-do (KR); Oh, Hyungrai, 16677 Suwon-si, Gyeonggi-do (KR); Lee, Hojung, 16677 Suwon-si, Gyeonggi-do (KR)
(74) Representative: Gulde & Partner

(56) References cited:
- US-A1- 2010 333 163
- US-A1- 2018 068 663

## Description

### BACKGROUND

### 1. Field

The disclosure relates to a server for determining a target device to perform an operation according to a user's intention included in a speech input received from a user in a network environment including a plurality of devices and for controlling the determined target device and an operation method of the server.

### 2. Description of Related Art

With developments in multimedia technologies and network technologies, a user may be provided with various services by using a device. In particular, with developments in speech recognition technology, the user may input a speech (e.g., an utterance, voice input, voice command, etc.) to a device and receive a response message according to a speech input through a service providing agent.

However, in a home network environment including a plurality of devices, when the user wants to receive a service through a device other than a client device that interacts through the speech input, etc., the user is inconvenienced due to having to select a service agent. In particular, because kinds of services that may be provided by each of the plurality of devices are different, there is a demand for a technology capable of effectively providing a service by identifying an intention included in a speech input of a user.

When identifying the intention included in the speech input of the user, artificial intelligence (Al) technology may be used, and a rule-based natural language understanding (NLU) technology may be used.

A prior art of US 2018/068663 A1 concerns a server controlling an external device wherein the server includes a communicator; a processor; a memory which stores at least one natural language understanding (NLU) engine for generating a command corresponding to a user's utterance.

### SUMMARY

Provided are a server and an operation method of the server as defined in the appended claims.

Additional aspects will be set forth in part in the description which follows and, in part, will be apparent from the description, or may be learned by practice of the presented embodiments.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a diagram illustrating a network environment including a server and a plurality of devices;
FIG. 2A is a diagram illustrating a speech assistant executable in a server, according to an embodiment;
FIG. 2B is a diagram illustrating a speech assistant executable in a server, according to an embodiment;
FIG. 3 is a conceptual diagram illustrating a server that determines an intention of a user from a speech input of the user, determines a target device related to the intention of the user, and controls the target device, according to an embodiment;
FIG. 4 is a flowchart illustrating a method, performed by a server, of determining a target device to perform an operation according to an intention of a user from a speech input of the user and controlling the target device, according to an embodiment;
FIG. 5 is a flowchart illustrating a method, performed by a server, of determining a target device to perform an operation according to an intention of a user from a speech input of the user and controlling the target device, according to an embodiment of the invention;
FIG. 6 is a flowchart illustrating a specific method, performed by a server, of determining a type of a target device through text converted from a speech input, according to an embodiment;
FIG. 7 is a flowchart illustrating a method, performed by a server, of determining a target device based on type of the target device determined from text and information about a plurality of devices, according to an embodiment;
FIG. 8 is a flowchart illustrating a method of determining a target device based on a response input of a user when a server is unable to determine the target device even by considering information of a plurality of devices, according to an embodiment;
FIG. 9 is a flowchart illustrating a method, performed by a server, of obtaining operation information of an operation to be performed by a target device using a second natural language understanding (NLU) model, according to an embodiment;
FIG. 10 is a diagram for describing a method, performed by a server, of determining a first intent and a second intent from text and obtaining operation information from an action plan management model, according to an embodiment;
FIG.11 is a flowchart illustrating operations of a client device, a server, an artificial intelligence (Al) assistant engine, and an Internet of Things (loT) cloud serve, according to an embodiment;
FIG. 12 is a flowchart illustrating operations of a client device, a server, and an loT cloud server, according to an embodiment;
FIG. 13 is a flowchart illustrating operations of a client device, a server, and an loT cloud server, according to an embodiment;
FIG. 14 is a block diagram illustrating a client device, a server, and an loT cloud server, according to an embodiment;
FIG 15 is a diagram illustrating system architecture of a program executed by a server, according to an embodiment;
FIG. 16 illustrates a device type classifier of a program executed by a server, according to an embodiment;
FIG. 17 illustrates conversational device disambiguation of a program executed by a server, according to an embodiment;
FIG. 18 illustrates a response execute manager of a program executed by a server according to an embodiment;
FIG. 19 illustrates an intelligence device resolver (IDR) of a program executed by a server, according to an embodiment;
FIG. 20 is a conceptual diagram illustrating an action plan management model according to an embodiment;
FIG. 21 is a diagram illustrating a capsule database according to an embodiment; and
FIG. 22 is a block diagram illustrating components of a device, according to an embodiment.

### DETAILED DESCRIPTION

Throughout the disclosure, expressions such as "at least one of a, b or c" indicates only a, only b, only c, both a and b, both a and c, both b and c, all of a, b, and c, or variations thereof.

Although the terms used in the embodiments have been described in general terms that are currently used in consideration of the functions referred to in the disclosure, the terms are intended to encompass various other terms depending on the intent of those skilled in the art, precedents, or the emergence of new technology. Also, some of the terms used herein may be arbitrarily chosen by the applicant. In this case, these terms may be defined in detail or can be understood from the description below. Accordingly, the terms used in the disclosure are to be understood in the context of the contents throughout the disclosure.

Hereinafter, an expression used in the singular encompasses the expression of the plural, unless it has a clearly different meaning in the context. The terms including technical and scientific terms used herein have the same meaning as commonly understood by one of ordinary skill in the art to which the disclosure belongs.

Throughout the entirety of the disclosure, when it is assumed that a certain part includes a certain element, the term "including" means that a corresponding element may further include other elements unless a specific meaning opposed to the corresponding element is provided. The term used in the specification such as "unit" or "module" indicates a unit for processing at least one function or operation, and may be implemented in hardware or software, or in a combination of hardware and software.

According to the situation, the expression "configured to" used herein may be used as, for example, the expression "suitable for," "having the capacity to," "designed to," "adapted to," "made to,", or "capable of." The term "configured to" does not necessarily mean only "specifically designed to" in hardware. Instead, the expression "a device configured to" may mean that the device is "capable of" operating together with another device or other elements. For example, a "processor configured to (or set to) perform A, B, and C" may mean a dedicated processor (e.g., an embedded processor) for performing a corresponding operation or a generic-purpose processor (e.g., a central processing unit (CPU) or an application processor) that performs corresponding operations by executing one or more software programs stored in a memory device.

According to one or more embodiments, a "first natural language understanding (NLU) model" is a model trained to interpret text converted from a speech signal to obtain a first intent corresponding to the text. The first NLU model may be a model trained to determine a device type for performing an operation intended by a user when the text is input. The first NLU model may determine the first intent by interpreting the input text, and the first intent may be used to determine the device type. The first NLU model may also be used to determine the target device by interpreting the input text.

Further, a "second NLU model" is an artificial intelligence model trained to interpret text related to a specific type of device. In this regard, there may be a plurality of second NLU models that respectively correspond to a plurality of different device types. When the device type is determined through the first NLU model, a second NLU model corresponding to the device type is selected or determined from the plurality of second NLU models. The text converted from the speech signal is input to the selected second NLU model. In this case, the input text may be part of the text converted from the speech signal. The second NLU model may be a model trained to determine a second intent related to the operation intended by the user and parameters by interpreting the input text. The second NLU model may be a model trained to determine a function related to a type of a specific device when the text is input. The storage capacity of the plurality of second NLU models may be larger than the storage capacity of the first NLU model.

An "intent" is information indicating an intention of a user determined by interpreting text. The intent is the information indicating the utterance intention of the user, and may be information indicating the operation of the target device requested by the user. The intent may be determined by interpreting text by using an NLU model. For example, when the text converted from the speech input of the user is "Play Movie Avengers on TV," the intent may be "content play." By way of another example, when the text converted from the speech input of the user is "lower the temperature of the air conditioner to 18 °C," the intent may be "temperature control."

The intent may include not only information (hereinafter, intention information) indicating the utterance intention of the user, but also a numerical value corresponding to information indicating the intention of the user. The numerical value may indicate the probability that the text will be related to information indicating a specific intent. As a result of analyzing the text by using the NLU model, when a plurality of pieces of information indicating the intention of the user are obtained, the intent information having a maximum numerical value corresponding to each intention information may be determined as the intent.

A "first intent" is information indicating the utterance intention of the user included in the text and may be used to determine at least one type of a plurality of target device types. The first intent may be determined by analyzing the text by using the first NLU model.

The "second intent" is information indicating the utterance intention of the user included in the text, and may be used to determine an operation to be performed by a specific type of a device. In addition, the second NLU model may be a model trained to determine the operation of the device related to the speech input of the user by interpreting the text. The second intent may be determined by analyzing the text by using the second NLU model.

In the specification, a "parameter" means variable information for determining detailed operations of the target device related to the intent. The parameter is information related to the intent, and a plurality of kinds of parameters may correspond to one intent. The parameter may include not only the variable information for determining operation information of the target device, but also a numerical value indicating a probability that text will be related to the variable information. As a result of analyzing the text by using the second NLU model, a plurality of piece of variable information indicating the parameter may be obtained. In this case, variable information having a maximum numerical value corresponding to each piece of the variable information may be determined as the parameter. For example, when the text converted from the speech input of the user is "Play Movie Avengers," the intent may be "content play" and the parameter may be "movie" which is a genre of content to be played and/or may be 'Avengers' which is a title of the content to be played.

In the specification, an "action plan management model" may be a model that manages operation information related to a detailed operation of a device in order to generate detailed operations to be performed by the target device and an order of performing the detailed operations. The action plan management model may manage the operation information related to the detailed operations for each device type and relationships between the detailed operations. The action plan management model may plan or be used to plan the detailed operations to be performed by the device and the order of performing the detailed operations based on the second intent and the parameter output from the text.

In the specification, the operation of the device may mean at least one action that the device performs by performing a specific function. The operation may indicate at least one action that the device performs by executing an application. The operation may indicate, for example, video play, music play, e-mailing, weather information reception, news information display, game play, photographing, etc., performed by the device through the execution of the application. It is understood, however, that these are just examples and the operation is not limited thereto.

The operation of the device may be performed based on information about the detailed operation output from the action plan management model. The device may perform at least one action by performing a function corresponding to the detailed operation output by the action plan management model. The device may store instructions for performing the function corresponding to the detailed operation. When (or based on) the detailed operation is determined, the device may perform a specific function by determining the instructions corresponding to the detailed operation and executing the instructions.

In addition, the device may store instructions for executing an application corresponding to the detailed operation. The instructions for executing the application may include instructions for executing the application itself and instructions for performing detailed functions constituting the application. When the detailed operation is determined, the device may execute the application by executing the instructions for executing the application corresponding to the detailed operation, and perform the detailed function by executing the instructions for performing the detailed function of the application corresponding to the detailed operation.

In the specification, the "operation information" may be information related to detailed operations to be performed by the device, correlations between each detailed operation and other detailed operations, and an order of performing the detailed operations. The correlations between each detailed operation and other detailed operations may include information about another operation that must be essentially performed before performing one operation in order to perform the operation. For example, when the operation to be performed is "music play," "power on" may be another detailed operation that must be performed before a "music playback" operation. The operation information may include, for example, functions to be performed by the target device to perform a specific operation, an order of performing the functions, an input value necessary for performing the functions, and an output value output as a result of performing the functions but is not limited to thereto.

An loT cloud server is a server that obtains, stores, and manages device information of each of a plurality of devices. The loT cloud server may obtain, determine, or generate a control command for controlling the device by utilizing the stored device information. The loT cloud server may transmit the control command to the device determined to perform an operation based on the operation information. The loT cloud server may receive a result of performing the operation according to the control command from the device that performed the operation. The loT cloud server may be configured as a hardware device independent of a "server" described herein, but is not limited thereto. The loT cloud server may be a component of the "server" described in the specification or may be a server designed to be classified into software.

Hereinafter, the disclosure will be described in detail by explaining embodiments with reference to the attached drawings. The disclosure may, however, be embodied in many different forms and should not be construed as being limited to the embodiments set forth herein.

Reference will now be made in detail to embodiments, examples of which are illustrated in the accompanying drawings.

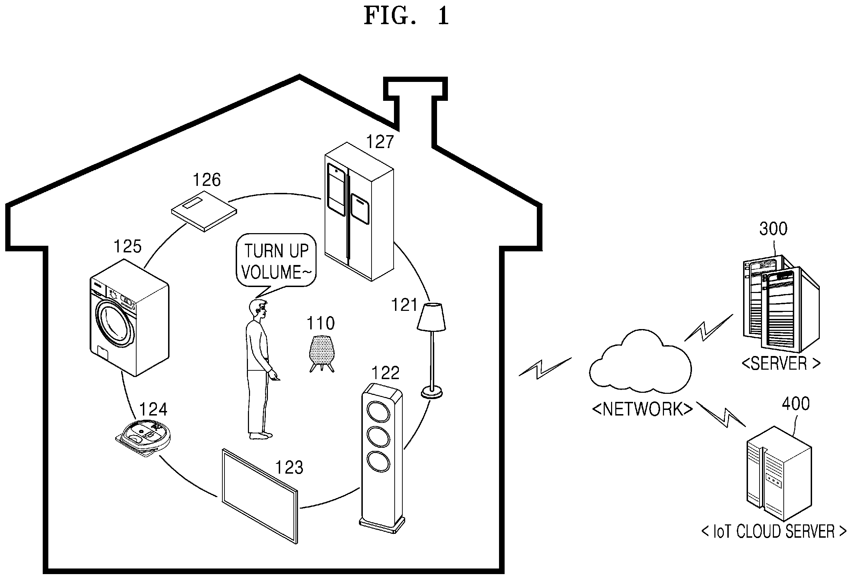

FIG. 1 is a diagram illustrating a network environment including a client device 110, a plurality of devices 121 to 127, and a server 300.

Referring to FIG. 1, the client device 110, the plurality of devices 121 to 127, the server 300, and an loT cloud server 400 may be interconnected by wired or wireless communication, and perform communication. In an embodiment, the client device 110 and the plurality of devices 121 to 127 may be directly connected to each other through a communication network (e.g., via a direct communication connection, via an access point, etc.), but is not limited thereto. For example, according to another embodiment, the client device 110 and the plurality of devices 121 to 127 may be connected to the server 300, and the client device 110 may be connected to the plurality of devices 121 to 127 through the server 300. Moreover, according to another embodiment, one or more of the plurality of devices 121 to 127 may be directly connected to the client device 110 through a communication network, and one or more other of the plurality of devices 121 to 127 and the client device 110 may be connected to the server 300. In addition, the client device 110 and the plurality of devices 121 to 127 may be connected to the loT cloud server 400. In another embodiment, the client device 110 and each of the plurality of devices 121 to 127 may be connected to the server 300 through the communication network, and may be connected to the external loT cloud server 400 through the server 300. In another embodiment, the client device 110 and the plurality of devices 121 to 127 may be connected via a gateway, or a relay. It is understood that the client device 110, the plurality of devices 121 to 127, the server 300, and the loT cloud server 400 may be connected to each other in any of various manners (including those described above), and may be connected to each other in two or more of of various manners (including those described above) at the same time.

The client device 110, the plurality of devices 121 to 127, the server 300, and the loT cloud server 400 may be connected through at least one of a local area network (LAN), a wide area network (WAN), a value added network (VAN), a mobile radio communication network, a satellite network or a combination thereof. Wireless communication methods may include, for example, wireless LAN (Wi-Fi), Bluetooth, Bluetooth low energy, Zigbee, Wi-Fi Direct (WFD), ultra wideband (UWB), infrared data association (IrDA), near field communication (NFC), etc., but are not limited thereto.

In an embodiment, the client device 110 may receive a speech input of a user. At least one of the plurality of devices 121 to 127 may be a target device that receives a control command of (or from) the server 300 and/or the loT cloud server 400 to perform a specific operation. At least one of the plurality of devices 121 to 127 may be controlled to perform the specific operation based on the speech input of the user received by the client device 100. In an embodiment, at least one of the plurality of devices 121 to 127 may receive the control command from the client device 110 without receiving a control command from the server 300 and/or the loT cloud server 400.

The client device 110 may receive the speech input (e.g., an utterance) from the user. In an embodiment, the client device 110 may include a speech recognition module. In an embodiment, the client device 110 may include the speech recognition module having a limited function. For example, the client device 110 may include the speech recognition module having a function of detecting a specified speech input (e.g., a wake up input such as "Hi Bixby," "Ok Google," etc.) or preprocessing a speech signal obtained from some speech inputs. In FIG. 1, the client device 110 is illustrated as an artificial intelligence (Al) speaker, but is not limited thereto. In an embodiment, any one of the plurality of devices 121 to 127 may be the client device 110.

The client device 110 may receive the speech input of the user through a microphone and transmit the received speech input to the server 300. In an embodiment, the client device 110 may obtain or generate the speech signal from the received speech input and transmit the speech signal to the server 300.

In the embodiment shown in FIG. 1, the plurality of devices 121 to 127 include a light 121, an air conditioner 122, a television (TV) 123, a robot cleaner 124, a washing machine 125, a scale 126 and a refrigerator. 127, but is not limited thereto. For example, the plurality of devices 121 to 127 may include at least one of a smartphone, a tablet personal computer (PC), a mobile phone, a video phone, an e-book reader, a desktop PC, a laptop PC, a netbook computer, a workstation, a server, personal digital assistant (PDA), a portable multimedia player (PMP), an MP3 player, a mobile medical device, a camera, a wearable device, etc. In an embodiment, the plurality of devices 121 to 127 may include home appliances. Home appliances may include at least one of, for example, a television, a digital video disk (DVD) player, an audio device, a refrigerator, an air conditioner, a vacuum cleaner, an oven, microwave, a washing machine, a dryer, an air purifier, a set-top box, a home automation control panel, a security control panel, a game console, an electronic key, a camcorder, an electronic picture frame, a coffee maker, a toaster oven, a rice cooker, a pressure cooker, etc.

The server 300 may determine the type of the target device to perform an operation intended by the user based on the received speech signal. The server 300 may receive the speech signal, which may be an analog signal or a digital signal, from the client device 110 and perform automatic speech recognition (ASR) to convert a speech portion into a computer-readable text. The server 300 may interpret the converted text by using a first NLU model and determine the type of the target device based on an analysis result.

The server 300 may determine an operation to be performed by the target device requested by the user by using a second NLU model corresponding to the determined type of the target device. It is understood that the server 300 may be a single server or may be a plurality of servers. For example, a first server may include or use the first NLU model and a second server may include or use the second NLU model, and the first server and the second server may be the same server or different servers.

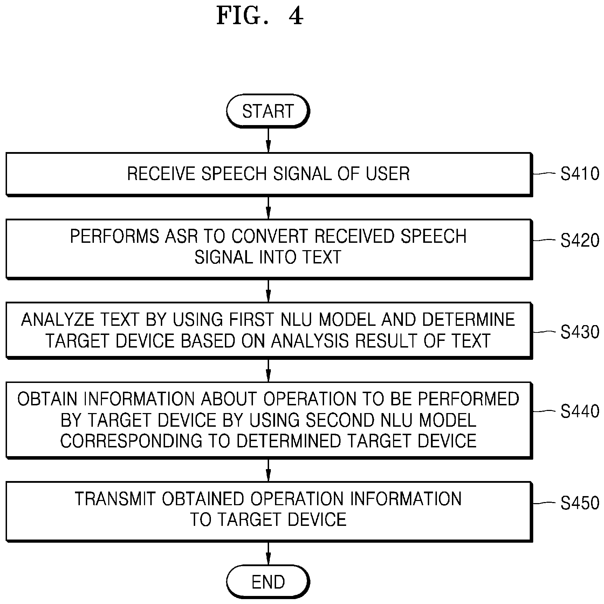

The server 300 may receive information of the plurality of devices 121 to 127 from the loT cloud server 400. The server 300 may determine the target device by using the received information of the plurality of devices 121 to 127 and the determined type of the target device. In addition, the server 300 may control the target device (e.g., transmit a control command or information to or toward the target device via the loT cloud server 400) such that the target device may perform the determined operation through the loT cloud server 400. The operation of the server 300 is described in detail below with reference to FIGS. 4 to 9.

The loT cloud server 400 may store the information about the plurality of registered devices 121 to 127 connected through a network. In an embodiment, the loT cloud server 400 may store at least one of an identification value (e.g., device ID information) of each of the plurality of devices 121 to 127, a device type of each of the plurality of devices 121 to 127, and function capability information of each of the plurality of devices 121 to 127. In an embodiment, the loT cloud server 400 may store state information about a power on/off state of each of the plurality of devices 121 to 127 or an operation being performed by each of the plurality of devices 121 to 127.

The loT cloud server 400 may transmit a control command for performing the determined operation to (e.g., toward) the target device among the plurality of devices 121 to 127. The loT cloud server 400 may receive information about the determined target device and information about the determined operation from the server 300, and transmit the control command to the target device based on the received information.

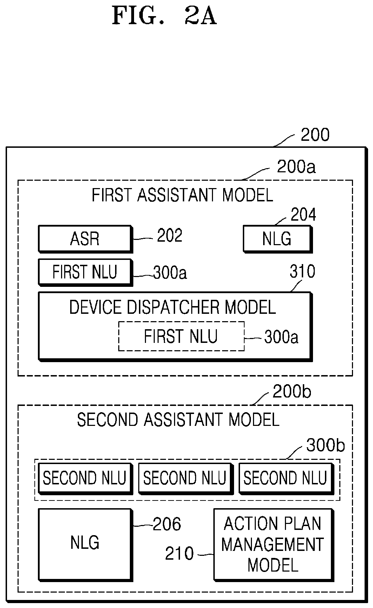

FIG. 2A is a diagram illustrating a speech assistant 200 performable in the server 300 according to an embodiment.

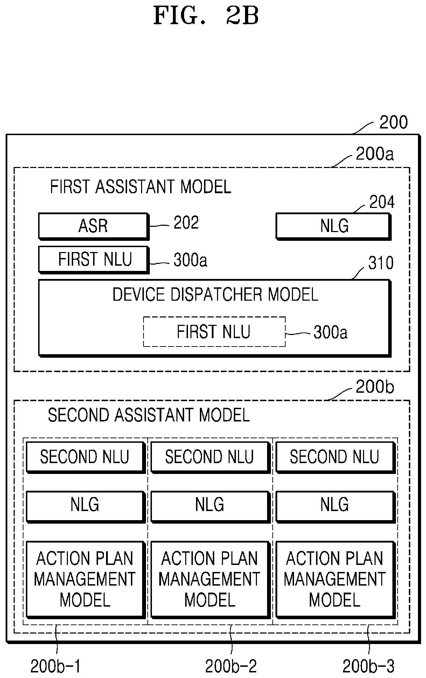

FIG. 2B is a diagram illustrating a speech assistant 200 performable in the server 300 according to an embodiment.

Referring to FIGS. 2A and 2B, the speech assistant 200 may be implemented in software, e.g., by at least one processor executing instructions stored in memory. Further, the speech assistant 200 can be divided or distributed into a plurality of executable software portions executable by different devices. The speech assistant 200 may be configured to determine an intention of a user from a speech input of the user and control a target device related to or based on the intention of the user. When a device controlled by the speech assistant 200 is added, the speech assistant 200 may include a first assistant model 200a configured to update an existing model with a new model through learning (e.g., deep learning, training, etc.), and a second assistant model 200b configured to add a model corresponding to the added device to the existing model.

The first assistant model 200a is a model that analyzes the speech input of the user to determine the target device related to the intention of the user. The first assistant model 200a may include an ASR model 202, a natural language generation (NLG) model 204, a first NLU model 300a, and a device dispatcher model 310. In an embodiment, the device dispatcher model 310 may include the first NLU model 300a. In another embodiment, the device dispatcher model 310 and the first NLU model 300a may be configured as separate components. The device dispatcher model 310 is a model for performing an operation of determining the target device by using an analysis result of the first NLU model 300a. The device dispatcher model 310 may include a plurality of detailed models.

The second assistant model 200b is a model specialized for a specific device (or a specific type, category, class, or set of device) and is a model for determining an operation to be performed by the target device corresponding to the speech input of the user. In FIG. 2A, the second assistant model 200b may include a plurality of second NLU models 300b, an NLG model 206, and an action plan management model 210. The plurality of second NLU models 300b may correspond to a plurality of different devices, respectively.

Referring to FIG. 2B, the second assistant model 200b may include a plurality of action plan management models and a plurality of NLG models. In FIG. 2B, a plurality of second NLU models included in the second assistant model 200b may respectively correspond to the plurality of second NLU models 300b of FIG. 2A, each of the plurality of second NLU models included in the second assistant model 200b may correspond to the NLG model 206 of FIG. 2A, and each of the plurality of action plan management models included in the second assistant model 200b may correspond to the action plan management model 210 of FIG. 2A.

In FIG. 2B, the plurality of action plan management models may be configured to respectively correspond to the plurality of second NLU models. In addition, the plurality of NLG models may be configured to respectively correspond to the plurality of second NLU models. In another embodiment, one NLG model may be configured to correspond to the plurality of second NLU models, and/or one action plan management model may be configured to correspond to the plurality of second NLU models.

In FIG. 2B, the first NLU model 300a may be configured to be updated to a new model through learning, etc., when (or based on), for example, the device controlled by the speech assistant 200 is added. In addition, when the device dispatcher model 310 is configured to include the first NLU model 300a, the device dispatcher model 310 may be configured to update an existing model itself to a new model through learning, etc., when (or based on), for example, the device controlled by the speech assistant 200 is added. The first NLU model 300a or the device dispatcher model 310 may be an artificial intelligence (Al) model.

In FIG. 2B, the second assistant model 200b may be updated by adding a second NLU model, an NLG model, and an action plan management model corresponding to the added device when the device controlled by the speech assistant 200 is added to the existing model. The second NLU model, the NLG model, and the action plan management model may be models implemented in a rule-based system.

In an embodiment of FIG. 2B, the second NLU model, the NLG model, and the action plan management model may be AI models. The second NLU model, the NLG model, and the action plan management model may be managed as one module according to their respective corresponding devices. In this case, the second assistant model 200-b may include a plurality of second assistant models 200b-1, 200b-2, and 200b-3 corresponding to a plurality of devices, respectively. For example, the second NLU model corresponding to a TV, the NLG model corresponding to the TV, and the action plan management model corresponding to the TV may be managed by the second assistant model 200b-1 corresponding to the TV. In addition, the second NLU model corresponding to a speaker, the NLG model corresponding to the speaker, and the action plan management model corresponding to the speaker may be managed by the second assistant model 200b-2 corresponding to the speaker. In addition, the second NLU model corresponding to a refrigerator, the NLG model corresponding to the refrigerator, and the action plan management model corresponding to the refrigerator may be managed by the second assistant model 200b-3 corresponding to the refrigerator.

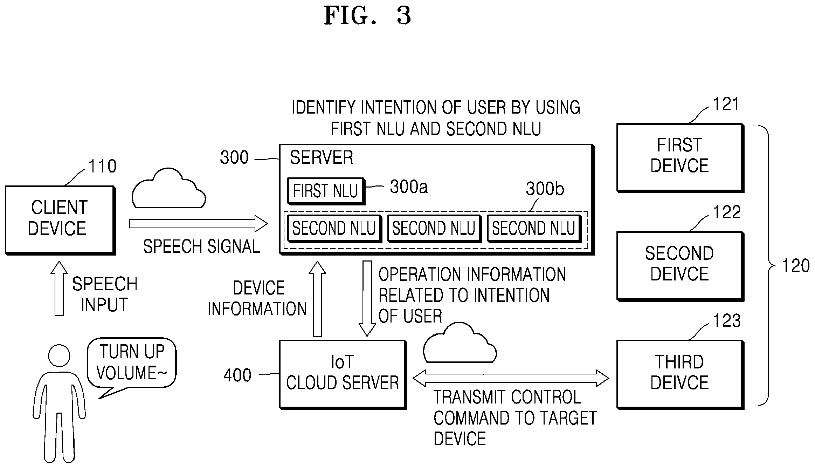

FIG. 3 is a conceptual diagram illustrating the server 300 that determines an intention of a user from a speech input of the user and controls a target device related to the intention of the user according to an embodiment.

Referring to FIG. 3, the client device 110 receives the speech input from the user through a microphone or from a microphone of an external device. In the embodiment shown in FIG. 2, the client device 110 may be an AI speaker, but is not limited thereto. The client device 110 may include a speech recognition module.

In an embodiment, the client device 110 may receive a speech input that does not specify the name of the target device to perform an operation of increasing the volume, such as "Turn up the volume," from the user. In another embodiment, the client device 110 may receive a speech input that includes the name of the target device, such as "Play the movie Bohemian Rhapsody on the TV~," from the user.

The client device 110 obtains the speech signal from the speech input received through the microphone, and transmits the obtained speech signal to the server 300.

The server 300 may include at least one of a program code including instructions regarding functions or operations of the speech assistant 200 that determine the target device 123 based on the received speech signal, an application, an algorithm, a routine, a set of instructions, an NLU engine, or an AI model.

The server 300 converts the speech signal received from the client device 110 into text by performing ASR. In an embodiment, the server 300 may convert the speech signal into a computer-readable text by using a predefined model such as an acoustic model (AM) or a language model (LM).

The server 300 may determine a first intent by interpreting the text by using the first NLU model 300a. The server 300 may determine the type of the target device related to the determined first intent.

The server 300 may determine a second NLU model corresponding to the type of the target device among the plurality of second NLU models 300b in consideration of the determined type of the target device. The server 300 may determine a second intent by interpreting the text by using the second NLU model corresponding to the type of the target device among the plurality of second NLU models 300b. In this case, the text input to the second NLU model may be at least a part of the text converted from the speech signal. In an embodiment, the server 300 may determine the second intent and at least one parameter from the text, by using the second NLU model.

The server 300 receives information of the plurality of devices 120 from the loT cloud server 400. The plurality of devices 120 may be devices previously registered in the loT cloud server 400 in relation or corresponding to, for example, account information of the user.

The server 300 may receive device information of the plurality of previously-registered devices 120 from the loT cloud server 400. In an embodiment, the server 300 may receive the device information including at least one of function capability information, position information, and state information of the plurality of devices 120 from the loT cloud server 400. In an embodiment, the server 300 may receive at least one of the state information including at least one of whether the plurality of devices 120 are powered on/off, information about operations currently performed by the plurality of devices 120, information about settings of devices (e.g., a volume setting, connected device information and/or settings, etc.), etc., from the loT cloud server 400.

The server 300 may determine the target device based on the determined type of target device and the device information received from the loT cloud server 400. The server 300 may determine the target device by selecting or determining a plurality of candidate devices corresponding to the determined type from among the plurality of devices 120 and considering state information of the selected plurality of candidate devices. In the embodiment shown in FIG. 3, the server 300 may determine the third device 123 as the target device.

The server 300 may determine the second intent and the parameter from the text by using the second NLU model corresponding to the determined type of the target device. In this case, the text input to the second NLU model may be at least a part of the text converted from the speech signal. The server 300 may determine an operation to be performed by the target device based on the second intent and the parameter. In an embodiment, the server 300 may transmit identification information of the target device, the second intent and the parameter (e.g., at least one parameter) to the action plan management model, and obtain operation information about detailed operations for performing an operation related to the second intent and the parameter from the action plan management model.

The server 300 transmits the operation information to the loT cloud server 400. The loT cloud server 400 may convert the operation information obtained from the server 300 into a control command (e.g., at least one control command) readable by the target device. Here, the control command refers to a command readable and executable by the target device such that the target device may perform the detailed operation(s) included in the operation information.

In the example of FIG. 3, the loT cloud server 400 transmits the control command to the third device 123 determined as the target device.

In a related art network environment including a plurality of devices, when the user wants to be provided with a service through a device other than the client device 110 that performs an interaction such as a dialog through the speech input, it is cumbersome in having to directly select and operate the other device.

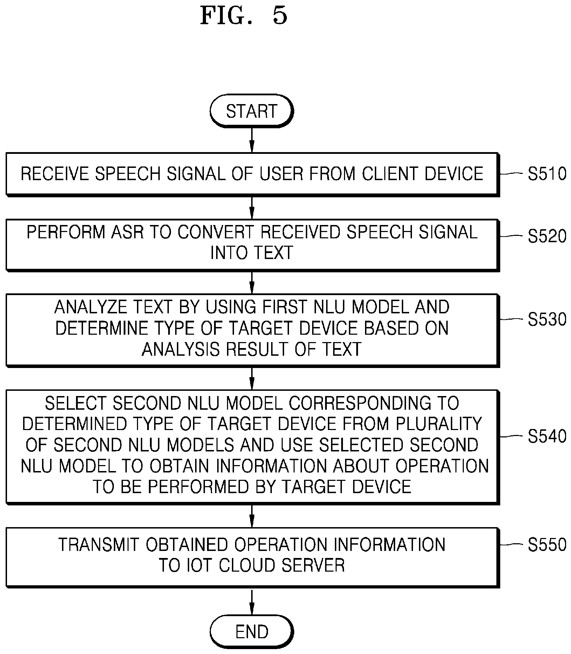

Conversely, the server 300 according to an embodiment may automatically determine the target device by determining the intention included in the speech input of the user received through the client device 110, thereby providing an automated system environment to the user and improving user convenience. In addition, the server 300 according to the embodiment shown in FIG. 3 may determine the target device 123 in consideration of state information of a device even when the user does not utter or unclearly utters the name of the device or the type of the device, thereby providing an intuitive and convenient user experience (UX). For example, if the plurality of devices 120 are televisions, the third device 123 is powered on while the first device 121 and the second device 122 are powered off, and the user provides a speech input to "turn up the volume," the server 300 may determine the third device 123 as the target device based at least in part on the power on/off states of the plurality of devices 120. Detailed operations performed by the server 300 are described in detail with reference to FIGS. 4 and 5.

FIG. 4 is a flowchart illustrating a method, performed by the server 300, of determining a target device to perform an operation according to an intention of a user from a speech input of the user and controlling the target device according to an embodiment.

Referring to FIG. 4, in operation S410, the server 300 receives a speech signal of the user. In an embodiment, the server 300 may receive the speech signal from the client device 110. In an embodiment, the server 300 may obtain, from the client device 110, at least one of an identification information (ID information) of the client device 110 or identification information of the user. In an embodiment, upon (or based on) receiving the identification information of the client device 110, the server 300 may retrieve account information of the user related to the identification information of the client device 110.

In operation S420, the server 300 performs ASR to convert the received speech signal into text. In an embodiment, the server 300 may perform ASR to convert the speech signal into a computer-readable text by using a predefined model such as an AM or an LM.

In operation S430, the server 300 analyzes the converted text by using a first NLU model and determines the target device based on an analysis result of the text. The first NLU model may be a model trained to interpret the text converted through the ASR to determine at least one target device related to the speech input of the user. According to an embodiment, a device dispatcher model including the first NLU model determines the at least one target device related to the speech input of the user. For example, when the text converted from the speech input of the user is "Play the movie Bohemian Rhapsody~," the target device may be determined as a TV.

In operation S440, the server 300 obtains information about an operation to be performed by the target device by using a second NLU model corresponding to the determined target device among a plurality of second NLU models.

In an embodiment, the server 300 may select the second NLU model corresponding to the determined target device from among the plurality of second NLU models. The second NLU mode,I which is a model specialized to a specific device, may be an AI model trained to determine an operation that is related to the device determined by the first NLU model and corresponds to the text. The operation may be at least one action that the device performs by performing a specific function. The operation may represent at least one action that the device performs by executing an application.

In operation S450, the server 300 transmits the obtained operation information to the target device. The server 300 may transmit the operation information to the target device using the operation information and the identification information (the device ID) of the determined target device. In an embodiment, the server 300 confirms the identification of the target device determined in operation S430 in device information of a plurality of previously-registered devices of the user in relation to (or corresponding to) the account information (e.g. the user ID) of the user obtained in operation S410. The device information of the plurality of devices may be obtained through the loT cloud server 400.

In an embodiment, the server 300 may directly transmit the operation information to the target device (e.g., via the Internet, a local communication network of the target device, etc.), in which case the operation information may include an operation command. In another embodiment, the server 300 may transmit the operation information to the target device through the loT cloud server 400. In this case, the loT cloud server 400 may confirm a control command to be transmitted to the target device using the operation information received from the server 300. The loT cloud server 400 may transmit the confirmed control command to the target device using the identification information of the target device. In another embodiment, the server 300 may transmit the operation information to a controller for the target device (e.g., a hub, bridge, home controller, the client device 110, etc.).

FIG. 5 is a flowchart illustrating a method, performed by the server 300, of determining a target device to perform an operation according to an intention of a user from a speech input of the user and controlling the target device according to an embodiment of the invention.

Referring to FIG. 5, in operation S510, the server 300 receives a speech signal of the user from the client device 110. In an embodiment, the client device 110 may receive the speech input of the user (e.g., utterance) through a microphone (or via an external device) and obtain the speech signal from the speech input of the user, and the server 300 may receive the speech signal from the client device 110. The client device 110 may obtain the speech signal by converting sound received through the microphone into an acoustic signal and removing noise (e.g., a non-speech component) from the acoustic signal.

In an embodiment, when transmitting the speech signal to the server 300, the client device 110 may transmit at least one of identification information of the client device 110 (e.g., ID information of the client device 110) and account information of the user (e.g., ID information of the user, a password, etc.) to the server 300 The server 300 may obtain the identification information (the ID information) of the client device 110 or the identification information of the user from the client device 110. In an embodiment, upon receiving the identification information of the client device 110, the server 300 may retrieve the account information of the user related to the identification information of the client device 110.

In operation S520, the server 300 performs ASR to convert the received speech signal into text. In an embodiment, the server 300 performs ASR to convert the speech signal into a computer-readable text by using a predefined model such as an AM or an LM. When receiving an acoustic signal from which noise is not removed from the client device 110, the server 300 may remove the noise from the received acoustic signal to obtain the speech signal and perform ASR on the speech signal.

In operation S530, the server 300 analyzes the converted text by using the first NLU model and determines a type of the target device based on an analysis result of the text. The first NLU model may be a model trained to interpret the text converted through ASR to obtain a first intent corresponding to the text. Here, the first intent may be used to determine at least one type of a plurality of types of target devices as information indicating the utterance intention of the user in the text. For example, when the text converted from the speech input of the user is "Play the movie Bohemian Rhapsody," the first intent may be "content play." In an embodiment, the first NLU model may be a model trained to interpret the text converted through ASR to determine the type of at least one target device related to the speech input of the user. In another embodiment, a device dispatcher model including the first NLU model may determine the type of at least one target device related to the speech input of the user based on the analysis result of the first NLU model.

The server 300 may determine the first intent of the user from the converted text by performing syntactic analysis or semantic analysis by using the first NLU model. In an embodiment, the server 300 parses the converted text in units of morphemes, words, or phrases by using the first NLU model. The server 300 may infer the meaning of a word extracted from the parsed text using linguistic features (e.g., grammatical elements) of the parsed morphemes, words, or phrases by using the first NLU model. The server 300 may determine the first intent corresponding to the inferred meaning of the word by comparing the inferred meaning of the word with predefined intents provided by the first NLU model.

The server 300 may determine the type of the target device based on the first intent. In an embodiment, the server 300 may determine the type of the target device related to the first intent by using the first NLU model. The "type" refers to a category of a device classified according to predetermined criteria.

The type of the device may be determined, for example, based on the function or use of the device. For example, the device may be classified into an audio device (e.g., a speaker) that outputs an acoustic signal, an image device (e.g., a TV) that outputs both the acoustic signal and an image signal, an air conditioning device (e.g., an air conditioner) that controls the temperature of air, a cleaning device (e.g., a robot cleaner), etc., but is not limited thereto.

In another embodiment, the server 300 may determine a target device type related to the first intent recognized from the text based on a matching model that may determine relevance between the first intent and the target device type. The relevance between the first intent and the target device type may be calculated with a predetermined numerical value. In an embodiment, the relevance between the first intent and the target device type may be calculated as a probability value.

The server 300 may determine the target device type related to the first intent among the plurality of target device types by applying the matching model to the first intent obtained from the first NLU model. In an embodiment, the server 300 may obtain a plurality of numerical values indicating a degree of relevance between the first intent and the plurality of target device types by applying the matching model to the first intent and obtain the target device type having the maximum value among the obtained plurality of numerical values as a final type. For example, when (or based on) the first intent is related to each of a first device type and a second device type, the server 300 may obtain a first numerical value indicating a degree of relevance between the first intent and the first device type and a second numerical value indicating a degree of relevance between the first intent and the second device type and determine the first device type having a higher numerical value among a first numerical value and a second numerical value as the target device type.

For example, the first numerical value indicating the degree of relevance between the first intent of "content play" and "TV" calculated or determined by applying the matching model may be greater than the second numerical value indicating the degree of relevance between another target device type, for example, "refrigerator" and "content play." In this case, the server 300 may determine the TV as the target device type related to the first intent of content play. In another example, when the first intent is "temperature control," the numerical value indicating the relevance of the first intent and the "air conditioner" may be higher than the numerical value indicating the relevance between the first intent and the "TV." In such a case, the server 300 may determine the air conditioner as the target device type related to the first intent of the temperature control.

It is understood, however, that one or more other embodiments are not limited to the above-described example. For example according to another embodiment, the server 300 may determine a predetermined number of device types by arranging numerical values indicating the degree of relevance between the first intent and the plurality of device types in ascending order. In an embodiment, the server 300 may determine a device type having a numerical value indicating the degree of relevance greater than or equal to a predetermined threshold as the device type related to the first intent. In this case, the plurality of device types may be determined as the target device type.

The server 300 may learn the matching model between the first intent and the target device type using, for example, a rule-based system, but is not limited thereto. An AI model used by the server 300 may be, for example, a neural network-based system (e.g., a convolution neural network (CNN), a recurrent neural network (RNN), support vector machine (SVM), linear regression, logistic regression, Naive Bayes, random forest, decision tree, k-nearest neighbor algorithm, etc.). Alternatively, the AI model may be a combination of the foregoing or another AI model.

The server 300 determines the target device based on the target device type determined by using the first NLU model and information of the plurality of devices. The server 300 transmits the account information (e.g., the user ID) of the user obtained from the client device 110 in operation S510 to the loT cloud server 400 and requests device information of the plurality of previously-registered devices of the user from the loT cloud server 400 in relation to the account information of the user. The loT cloud server 400 may be a server that stores the device information of the plurality of previously-registered devices of the user for each user account. The loT cloud server 400 may be separate from the server 300 and may be connected to the server 300 through a network. The server 300 may receive the device information of the plurality of registered devices in relation to the account information of the user from the loT cloud server 400. For example, the device information may include at least one of the identification information of the device (device ID information), function capability information, position information, and state information.

In an embodiment, the server 300 may receive the device information of the plurality of devices from the loT cloud server 400 using the account information of the user previously stored in the server 300, etc. The server 300 may receive the device information from the loT cloud server 400 even before the speech input is received and may receive the device information according to a predetermined period.

The function capability information may be information about a predefined function of a device to perform an operation. For example, when the device is an air conditioner, the function capability information of the air conditioner may indicate a function such as temperature up, temperature down, and/or air purification, and when the device is a speaker, the function capability information of the speaker may indicate a function such as volume up/down and/or music play. The function capability information may be previously stored in the loT cloud server 400. However, the disclosure is not limited thereto, and the function capability information may be stored in the server 300 according to another embodiment.

In addition, the position information is information indicating the position of the device, and may include, for example, at least one of a name of a place where the device is located and a position coordinate value indicating the position of the device. For example, the position information of the device may include a name indicating a specific place in a house such as a room or a living room, or may include a name of a place such as a house or an office.

The state information of the device may be information indicating, for example, a current state of the device such as at least one of power on/off information and information about an operation currently performed by the device.

In an embodiment, the server 300 may transmit the information about the target device type determined in operation S530 and the account information of the user to the loT cloud server 400 and obtain only information about the device corresponding to the determined target device type among the plurality of previously-registered devices in relation to the account information of the user.

In an embodiment, the server 300 may store the device information of the plurality of previously-registered devices of the user for each user account. In this case, the server 300 does not request the device information from the loT cloud server 400 but may use the device information of the plurality of previously-registered devices of the user in relation to the account information of the user stored in the server 300. In addition, the server 300 may use the information about the determined target device type to obtain only the information about the device corresponding to the determined target device type among the plurality of previously-registered devices of the user.

The server 300 may select or determine a candidate device corresponding to the determined target device type from among the plurality of previously-registered devices in relation to the account information of the user. One candidate device may be selected or a plurality of candidate devices may be selected. When (or based on) one candidate device is selected, the selected candidate device may be determined as the target device.

In an embodiment, when (or based on) the plurality of candidate devices are selected, the server 300 may determine the target device in consideration of state information of the plurality of selected candidate devices. For example, when the target device type related to the first intent of "content play" is determined as the "TV," the server 300 may determine a living room TV which is currently powered on as the target device among the living room TV, a main room TV, and a child room TV that are the candidate devices.

In another embodiment, when (or based on) the plurality of candidate devices are selected, the server 300 may determine the target device in consideration of installation positions of the plurality of selected candidate devices. For example, when the target device type related to the first intent of "content play" is determined as the "TV," the server 300 may determine the main room TV that is installed at a position close to the current position of the user as the target device among the living room TV, the main room TV, and the child room TV that are the candidate devices. In the above examples, whether each of the living room TV, the main room TV, and the child room TV is powered on/off and the installation position information may be obtained from the loT cloud server 400. According to another embodiment, the server 300 may determine the target device in consideration of a plurality of factors, such as in consideration of both the state information and location of the plurality of candidate devices.

The server 300 may determine the target device based on the determined type and the device information received from the loT cloud server 400, but is not limited thereto. When there is a plurality of candidate devices corresponding to the determined type and the server 300 does not determine the target device even when using the device information received from the loT cloud server 400, the user may request the server 300 to determine a specific target device through a query message.

The type of one target device is determined in operation S530, but the disclosure is not limited thereto. For example, according to another embodiment, the server 300 may determine a plurality of target device types in operation S530. When the plurality of target device types are determined, the server 300 may determine the target device based on the plurality of target device types. For example, when the first device type and the second device type are determined as the target device type, the server 300 may select a plurality of devices corresponding to the first device type from among the plurality of previously-registered devices in relation to the account information of the user and determine a first candidate device and a second candidate device based on the state information of the plurality of selected devices and the installation position information. In addition, the server 300 may select a plurality of devices corresponding to the second device type from among the plurality of previously-registered devices and determine a third candidate device and a fourth candidate device based on the state information of the plurality of selected devices and the installation position information. The server 300 may determine any one of the first candidate device, the second candidate device, the third candidate device, and the fourth candidate device as the target device.

In operation S540, the server 300 selects a second NLU model corresponding to the determined type of the target device from the plurality of second NLU models and uses the selected second NLU model to obtain information about the operation to be performed by the target device. The second NLU model, which is a model specialized for a specific type of device, may be an AI model trained to obtain a second intent related to the device corresponding to the type determined by the first NLU model and corresponding to the text and parameter. The second intent, which is information indicating the utterance intention of the user included in the text, may be used to determine an operation to be performed by a specific type of device.

In an embodiment, the second NLU model may be a model trained to determine an operation of the device related to the speech input of the user by interpreting the text. The operation may be at least one action that the device performs by performing a specific function. The operation may represent at least one action that the device performs by executing an application or instructions.

In an embodiment, the server 300 may analyze the text by using the second NLU model corresponding to the determined type of target device. In this case, the text input to the second NLU model may be at least a part of the text converted from the speech signal. For example, when a device name is included in the converted text, the server 300 may remove the device name from the text and input the text without the device name to the second NLU model. That is, the server 300 may convert and input the converted text into text in a format analyzable by the second NLU model. The format analyzable by the second NLU model may be a sentence structure corresponding to text used as training data of the second NLU model.

The server 300 parses the text in units of morphemes, words, or phrases by using the second NLU model, identifies the meaning of the parsed morphemes, words, or phrases through grammatical and semantic analysis, matches the identified meaning with a predefined word and determines the second intent and the parameter. The server 300 may determine the second intent from the text by using the second NLU model, and may determine an intent specialized, specific, or corresponding to the device type as the second intent rather than the first intent. For example, when (or based on) the device type is determined as the "TV," the server 300 may analyze the text "Play the movie Bohemian Rhapsody -" to determine a "movie content play" as the second intent by using the second NLU model. By way of another example, when the device type is determined as the "speaker," the server 300 may analyze the text "Play the movie Bohemian Rhapsody -" to determine a "song play" as the second intent by using the second NLU model.

The server 300 may include a plurality of second NLU models, and may select or determine at least one second NLU model corresponding to the type of the target device based on the type of the target device determined in S530. When (or based on) at least one second NLU model is selected or determined, the server 300 may determine the second intent and the parameter by interpreting the text by using the selected second NLU model.

The server 300 may obtain operation information about at least one detailed operation related to the second intent and the parameter by using an action plan management model in which action plans regarding the determined type of the target device are stored. The action plan management model may manage information about detailed operations of a device for each device type and relationships between the detailed operations. The server 300 may plan the detailed operations to be performed by the device (or a plurality of devices) and the order of performing the detailed operations based on the second intent and the parameter by using the action plan management model.

The server 300 may obtain operation information about a series of detailed operations to be performed by the target device(s) by providing the action plan management model with the identification information (device ID information for one or more devices, a group or scene ID for a group of devices, etc.) of the determined target device and the identification value of the target device type. The operation information may be information related to the detailed operations to be performed by the device and the order of performing the detailed operations. The operation information may include information related to the detailed operations to be performed by the device, correlations between each detailed operation and other detailed operations, and the order of performing the detailed operations. The operation information may include, for example, at least one of functions to be performed by the target device in order to perform a specific operation, the order of performing the functions, an input value to (e.g., required to) perform the functions, and an output value output as a result of performing the functions, but is not limited thereto.

In operation S550, the server 300 transmits the obtained operation information to the loT cloud server 400. The server 300 may transmit the operation information and the identification information (device ID) of the determined target device to the loT cloud server 400.

The loT cloud server 400 may obtain a control command for controlling detailed operations of the target device based on the operation information and the device identification information received from the server 300. According to an embodiment, the loT cloud server 400 may select the control command for controlling the detailed operations of the target device in the operation information, from among control commands of the target device previously stored in a database (DB). The loT cloud server 400 may include the DB in which control commands and operation information with respect to a plurality of devices are stored. The loT cloud server 400 may select the DB using the device identification information received from the server 300 and retrieve a control command using the operation information in the selected DB.

The control command, which is information readable, by the device may include instructions for the device to perform at least one function and perform the detailed operations according to the operation information.

The loT cloud server 400 may transmit the control command to the target device.

In order for a device to perform an operation by receiving a speech of a user in a related art network environment including a plurality of devices, all of the plurality of devices must have a function of receiving a speech input of the user and operating according to the speech input, which causes a problem in that resources of the devices are excessive. That is, when a new device is added to the network environment, all functions have to be newly developed to control the new device.

The server 300 according to an embodiment may convert the speech input of the user received by the client device 110 into the text and interpret the text to determine the type of the target device by using the first NLU model, and obtain operation information related to the analyzed text by using the second NLU model corresponding to the device type determined by the first NLU model, thereby reducing unnecessary resources in the device and ensuring versatility of the system architecture.

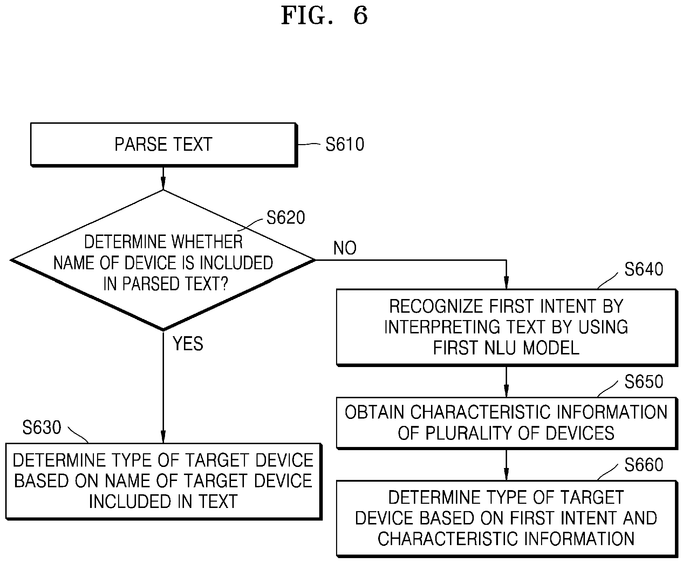

FIG. 6 is a flowchart illustrating a specific method, performed by the server 300, of determining a type of a target device through text converted from a speech input according to an embodiment. FIG. 6 is a diagram illustrating a specific embodiment of operation S530 of FIG. 5.

Referring to FIG. 6, In operation S610, the server 300 parses the text converted in operation S520. In an embodiment, the server 300 may parse the text in units of at least one of morphemes, words, or phrases by using a first NLU model. For example, the server 300 may parse the text "Play the movie Bohemian Rhapsody on the TV-" into "TV," "Bohemian Rhapsody," and "play."

In operation S620, the server 300 determines whether a name (or specific or pre-stored identifier) of a device is included in the parsed text. In an embodiment, the server 300 uses the first NLU model to analyze linguistic features (e.g., grammatical elements) of the parsed morphemes, words, or phrases, and infer the meaning of a word extracted from the parsed text. The server 300 may determine the device name corresponding to the inferred meaning of the word by comparing the inferred meaning of the word with predefined device names provided by the first NLU model. For example, the server 300 may determine the 'TV' as the device name by comparing a word or a phrase extracted by parsing the text "Play the movie Bohemian Rhapsody on the TV-" with predefined device names. In this case, the server 300 may determine that the text includes the device name.

By way of another example, even though the word or the phrase extracted by parsing the text "Play the movie Bohemian Rhapsody on the TV-" is compared with the predefined device names, when the word or the phrase corresponding to the device name is not extracted, the server 300 may determine that the device name is not included in the text.

When (or based on) it is determined in operation S620 that the device name is included in the parsed text (YES), the server 300 determines the type of the target device based on the name of the target device included in the text (operation S630). For example, when the server 300 parses the text "Play the movie Bohemian Rhapsody on the TV-" and extracts the "TV" as the device name, the server 300 may determine the "TV" as the target device type.

In an embodiment, the parsed text may include a common name and an installation position of the device. In this case, the server 300 may obtain a word about the common name and the installation position of the device by matching the word or the phrase extracted by parsing the text with the predefined word or phrase. For example, when the text is "Play the movie Bohemian Rhapsody on the TV in the living room," the server 300 may parse the text and then extract, from the parsed text, a word about the common name (the TV) and the installation position (the living room) of the device. The server 300 may determine the type of the target device based on the common name and the installation position of the extracted device.

When (or based on) it is determined in operation S620 that the device name is not included in the parsed text (NO), the server 300 recognizes a first intent by interpreting the text by using the first NLU model (operation S640). In an embodiment, the server 300 may determine the first intent of a user from the text by performing at least one of a grammatical analysis and a semantic analysis by using the first NLU model. The server 300 may infer the meaning of the word extracted from the parsed text by analyzing linguistic features (e.g., grammatical elements) of the morphemes, words, and/or phrases extracted from the parsed text by using the first NLU model. The server 300 may determine the first intent corresponding to the inferred meaning of the word by comparing the inferred meaning of the word with predefined intents provided by the first NLU model. For example, the server 300 may parse the text "Play the movie Bohemian Rhapsody -" into units of words or phrases such as "Bohemian Rhapsody" and "play," and compare the parsed words or phrases with the predefined intents to determine "content play" that plays content having an identification value (e.g., a movie title) of Bohemian Rhapsody as the first intent.

In operation S650, the server 300 obtains characteristic information of a plurality of devices. In an embodiment, the server 300 may receive, from the loT cloud server 400, the characteristic information of the plurality of devices previously registered in the loT cloud server 400 in relation to account information (e.g., a user ID) of the user. The server 300 may request the characteristic information of the plurality of registered devices in relation to the account information of the user from the loT cloud server 400. The server 300 may receive the characteristic information of the plurality of registered devices in relation to the account information of the user from the loT cloud server 400. The characteristic information may be information used by the server 300 to determine a device type. The characteristic information may include part of device information. The characteristic information may include, for example, information about an identification value (a device ID) of each of the plurality of devices and function capability information.

The server 300 may store the characteristic information of the plurality of registered devices in relation to the account information of the user. In this case, the server 300 may use the stored characteristic information.

In operation S660, the server 300 determines the target device type based on the first intent and the characteristic information. In an embodiment, the server 300 may determine the target device type related to the first intent recognized from the text based on a matching model capable of determining relevance between the first intent and the target device type. The matching model may be predefined based on the first intent and the characteristic information of the target device. For example, at least one function may match with respect to an operation indicated by the first intent in the matching model. The server 300 may determine at least one device type by identifying a device capable of performing the function matching the first intent based on the characteristic information of the device. The function capability information of the device may be information about a function executable by the device. For example, the function capability of a mobile phone may include social network service (SNS), map, telephone, the Internet, etc., the function capability of the TV may include content play, and the function capability of an air conditioner may include air temperature control.

For example, in the matching model, the first intent of "content play" may be defined to match a "TV" or a "speaker" having the function capability of playing content such as a movie or music. By way of another example, in the matching model, the first intent of "temperature control" may be defined to match an "air conditioner" that is a device having the capability of performing a function of turning up or down the temperature of air.

In an embodiment, a matching rule or a matching pattern between the first intent and the target device type may be predefined in the matching model.

In the matching model, a degree of matching, that is, a degree of relevance between the first intent and the target device type, may be calculated as a probability value. By applying the matching model to the first intent determined from the text, the server 300 may obtain a plurality of probability values indicating the degree of matching between the first intent and a plurality of target device types and determine a target device type having a maximum value among the obtained plurality of probability values as a final target device type.

For example, a first probability value indicating the degree of matching between the first intent of "content play" and the "TV" calculated by applying the matching model may be greater than a second probability value indicating the degree of matching between another target device type, for example, a "refrigerator" and "content play." In this case, the server 300 may determine the TV as the target device type related to the first intent of "content play." By way of another example, when the first intent is "temperature control," a probability value indicating the degree of matching between the first intent and the "air conditioner" may be greater than a probability value indicating the degree of matching between the first intent and the "TV." In such a case, the server 300 may determine the air conditioner as the target device type related to the first intent of "temperature control."

The server 300 may learn or train the matching model between the first intent and the target device type using, for example, a rule-based system, but is not limited thereto. An AI model used by the server 300 may be, for example, a neural network-based system (e.g., a convolution neural network (CNN), a recurrent neural network (RNN), support vector machine (SVM), linear regression, logistic regression, Naive Bayes, random forest, decision tree, a k-nearest neighbor algorithm, etc.). Alternatively, the AI model may be a combination of the foregoing or another AI model.

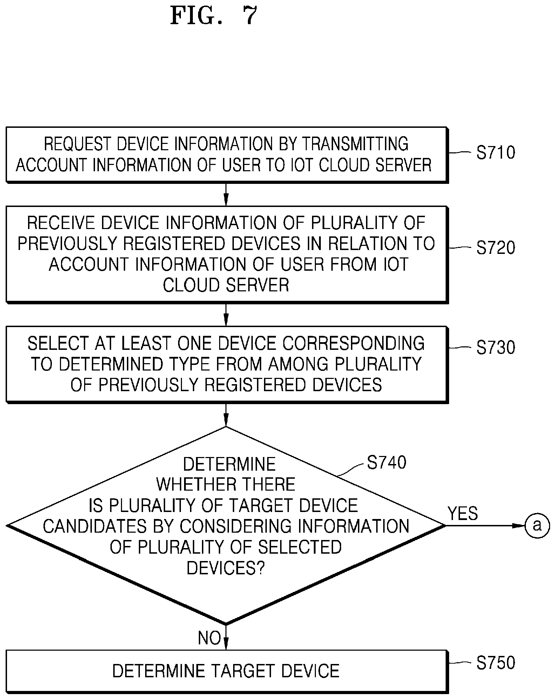

FIG. 7 is a flowchart illustrating a method, performed by the server 300, of determining a target device based on a type of the target device determined from text and information about a plurality of devices according to an embodiment.

Referring to FIG. 7, in operation S710, the server 300 requests device information by transmitting account information of or corresponding to a user to the loT cloud server 400. The server 300 may transmit the account information (e.g., a user ID or a device ID such as the ID of the client device) of or corresponding to the user obtained from the client device 110 to the loT cloud server 400 and request the device information of a plurality of previously-registered devices of the user in relation to the account information of the user to the loT cloud server 400.

In an embodiment, the server 300 may transmit information about the determined target device type to the loT cloud server 400 along with the account information of the user. In this case, the server 300 may request only device information of a device corresponding to the determined target device type among the plurality of registered devices in relation to the account information of the user from the loT cloud server 400.

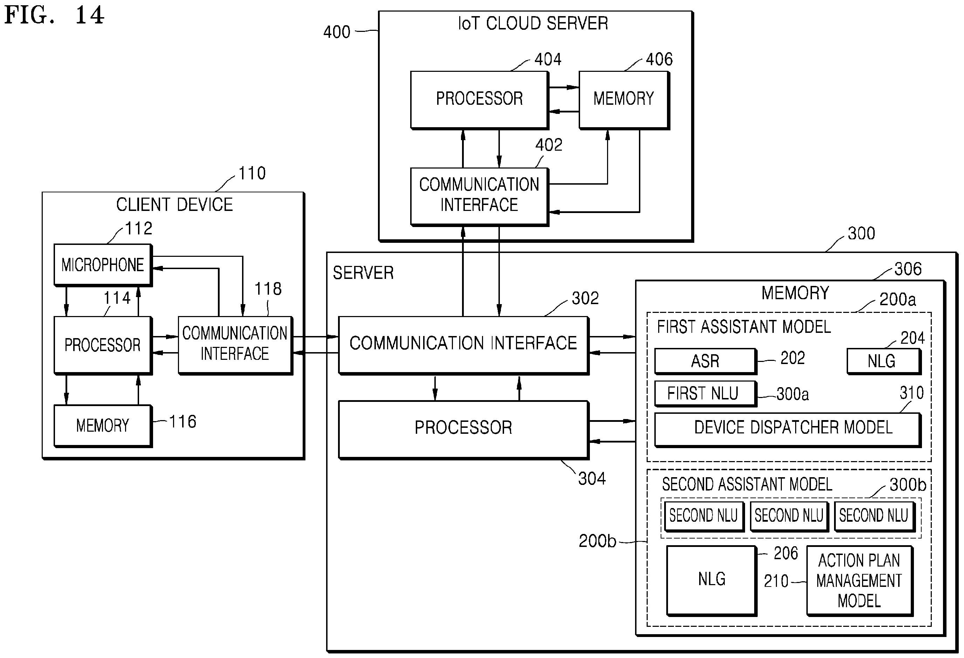

In an embodiment, the server 300 may store the information about the plurality of devices in the memory 306 (see FIG. 14), and retrieve the information about the plurality of devices stored in the memory 306 by using the account information of the user.

In operation S720, the server 300 receives the device information of the plurality of previously-registered devices in relation to the account information of the user from the loT cloud server 400. The loT cloud server 400 may store a list of the plurality of previously-registered devices according to account information of the user received from the server 300 and store device information including at least one of function capability information, position information, and state information of each of the plurality of devices included in the list. The state information may include at least one of, for example, power on/off information of the plurality of previously-registered devices in relation to the account information of the user and information about one or more operations currently performed by the plurality of previously-registered devices. The server 300 may receive at least one of the function capability information, the position information, or the state information of each of the plurality of devices from the loT cloud server 400.

In an embodiment, when the server 300 stores the information about the plurality of devices in the memory 306, the server 300 may obtain the information about the plurality of previously-registered devices in relation to the account information of the user in the information stored in the memory 306.

In operation S730, the server 300 selects or determines at least one device corresponding to the determined type from among the plurality of devices. In an embodiment, when (or based on) only one type is determined as the target device type related to the first intent, the server 300 may select at least one device corresponding to the determined type. In another embodiment, when (or based on) the server 300 determines a plurality of types as the target device type related to the first intent, the server 300 may select a plurality of devices respectively corresponding to the plurality of target device types. For example, when a plurality of types including a "TV" and a "speaker" are determined as the target device type, the server 300 may select a plurality of devices corresponding to the TV, for example, a living room TV, a main room TV, and a child room TV, and an AI speaker and a Bluetooth audio speaker corresponding to the speaker from among the plurality of previously-registered devices in relation to the account information of the user.

In operation S740, the server 300 determines whether there is a plurality of target device candidates by considering (or based on) device information of the plurality of selected devices. In an embodiment, when (or based on) there is one target device type, the server 300 may determine a target device candidate based on device information of a device corresponding to the target device type, and determine whether there is a plurality of determined target device candidates. In another embodiment, when (or based on) there is a plurality of types of target devices, the server 300 may determine a target device candidate based on state information or installation position information of each of a plurality of devices corresponding to the plurality of types, and determine whether there is a plurality of determined target device candidates.

When (or based on) it is determined in operation S740 that there is one target device type (NO), the server 300 determines one target device as a final target device (operation S750).

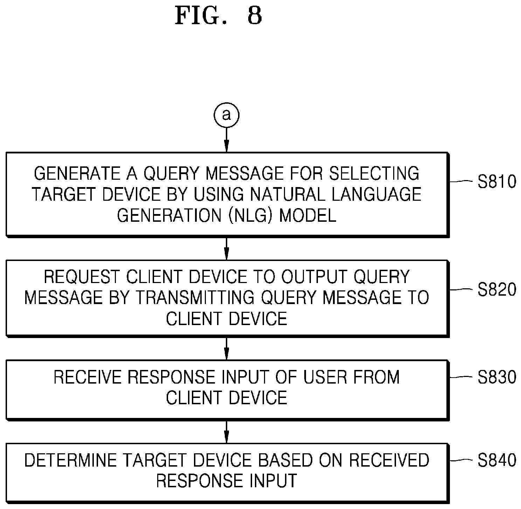

In operation S740, when (or based on) there is a plurality of target device candidates (YES), the process proceeds to operation ⓐ, which is described with reference to FIG. 8.

FIG. 8 is a flowchart illustrating a method of determining a target device based on a response input of a user when the server 300 is unable to determine the target device even by considering information of a plurality of devices according to an embodiment. FIG. 8 is a diagram illustrating a specific embodiment related to the case of ⓐ shown in operation S740 of FIG. 7.

Referring to FIG. 8, in operation S810, the server 300 generates a query message for selecting the target device by using a natural language generation (NLG) model. The server 300 may generate the query message for selecting any one target device from a plurality of device candidates corresponding to a specific type selected or determined in operation S730 of FIG. 7. For example, when the type of device selected in operation S730 of FIG. 7 is a TV, there may be a plurality of TVs including a "living room TV," a "main room TV," and a "child room TV" in a network. In operation S810, the server 300 may perform a disambiguation operation of determining the target device among the plurality of selected devices. In an embodiment, the server 300 may generate the query message that induces or requests a response of the user regarding which of the plurality of device candidates to determine as the target device by using the NLG model.

In an embodiment, the query message may be a message including a list listing the plurality of device candidates corresponding to the specific type and requesting the user to select the target device from among the plurality of device candidates included in the list. For example, the server 300 may generate the query message providing the user with the list listing a plurality of TVs in a predetermined order such as "Which TV will you play the movie Bohemian Rhapsody in: 1. the living room TV, 2. the main room TV, or 3. the child room TV?"

In another embodiment, the query message may be a message to select the plurality of device candidates according to an installation position. For example, the server 300 may generate the query message such as "Which TV will you play the movie Bohemian Rhapsody in: the TV in the living room, the TV in the main room, or the TV in the child room?" that suggests the plurality of TVs based on the position and requests the user to select the target device from among the plurality of suggested TVs.

The server 300 may convert a query message in the form of text into an audio signal by using a text to speech (TTS) model in the query message generated by the NLG model.

In operation S820, the server 300 requests the client device 110 to output the query message by transmitting the query message to the client device 110. The server 300 may transmit the query message to the client device 110. The server 300 may transmit the query message converted into the audio signal to the client device 110. When the client device 110 is a device including a display, the client device 110 may transmit the query message in the form of text.

In operation S830, the server 300 receives the response input of the user from the client device 110. The client device 110 may receive the response input of the user that selects a specific device from among the plurality of devices included in the query message. For example, when (or based on) the query message is a message providing the user with the list listing the plurality of TVs in the predetermined order such as "Which TV will you play the movie Bohemian Rhapsody in: 1. the living room TV, 2. the main room TV, or 3. the child room TV?", the client device 110 may receive the response input that selects the target device through a specific ordinal number such as a "first TV." For example, when (or based on) the query message is a message requesting the user to select from among the plurality of TVs based on the position such as "Which TV will you play the movie Bohemian Rhapsody in: the TV in the living room, the TV in the main room, or the TV in the child room?," the client device 110 may receive the response input of the user that selects the target device through the installation position, such as the "living room." The server 300 may receive the response input of the user from the client device 110.

The response input of the user may be transmitted in the form of a speech signal from the client device 110.

In operation S840, the server 300 determines the target device based on the response input of the user. The server 300 may extract a word about the target device selected by the user by converting the received response input into text through an ASR process and analyzing the converted text by using the NLG model. The server 300 may interpret the meaning of the extracted word by using the NLG model and determine the target device based on the extracted word.

In an embodiment, the text with respect to the response input of the user may be obtained through the ASR process, and the meaning of the text may be determined by matching the obtained text with a predefined text. The ASR model and the NLG model used in this regard may be different models from models described above with reference to FIGS. 2A and 2B. The server 300 may use at least one of the models described above with reference to FIGS. 2A and 2B.

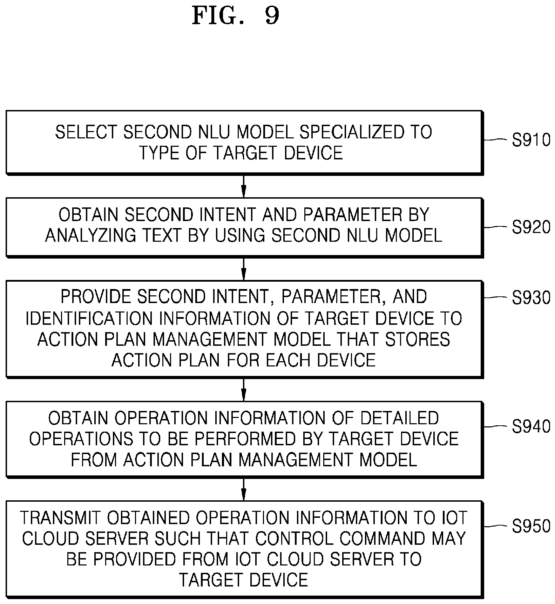

FIG. 9 is a flowchart illustrating a method, performed by the server 300, of obtaining operation information of an operation to be performed by a target device by using a second NLU model according to an embodiment. FIG. 9 is a diagram illustrating a specific embodiment of operation S540 of FIG. 5.

Referring to FIG. 9, in operation S910, the server 300 selects a second NLU model specialized (or specific, corresponding, etc.) to a target device type by using the type of the target device determined in operation S530. The second NLU model is a model trained to interpret text in relation to a specific type of device. The second NLU model may be a model trained to determine a second intent and parameters in relation to specific types of devices by interpreting text. There may be a plurality of second NLU models, with each second NLU model corresponding to each device type. In an embodiment, the server 300 may select the second NLU model corresponding to the target device type from among the plurality of second NLU models based on identification information of the determined target device type.

In operation S920, the server 300 obtains the second intent and the parameter by analyzing the text by using the second NLU model. In an embodiment, the server 300 may parse the text in units of words and/or phrases by using the second NLU model, infer the meaning of the parsed words and/or phrases through grammatical and semantic analysis, match the inferred meaning with a predefined word and parameter and determine the second intent and the parameter. In an embodiment, the server 300 may obtain the second intent and the parameter by using a parsing result of the text performed in operation S910.

The second intent is information indicating the utterance intention of the user included in the text, and may be used to determine an operation to be performed by a specific type of a device. The second intent may be determined by analyzing the text by using the second NLU model. The parameter is variable information for determining detailed operations of the target device related to the second intent. The parameter is information related to the second intent, and a plurality of kinds of parameters may correspond to one second intent. The parameter may include the variable information for determining operation information of the target device and a numerical value indicating a probability that text will be related to the variable information. As a result of analyzing the text by using the second NLU model, when (or based on) a plurality of piece of variable information indicating the parameter is obtained, variable information having a maximum numerical value corresponding to each piece of the variable information may be determined as the parameter. For example, in the text "Play the movie Bohemian Rhapsody on the Living Room TV -," the second intent may be "content play" indicating an operation related to the TV, and the parameter may be determined as "TV," "Living Room TV," "Movie" or "Bohemian Rhapsody," which is a title of a movie.

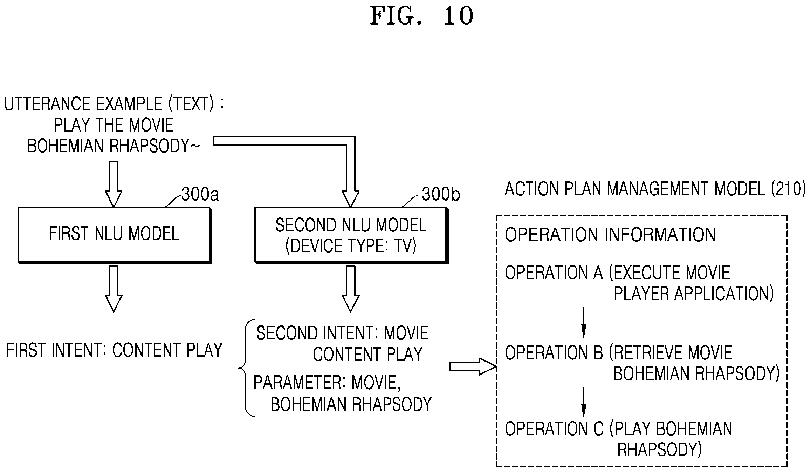

Because the second NLU model determines the second intent related to the type of a specific device by interpreting the text, the second intent may be more specific data than the first intent. The first intent and the second intent are described in detail below with reference to FIG. 10.

In operation S930, the server 300 provides the second intent, the parameter, and identification information of the target device to an action plan management model that stores an action plan for each device. In an embodiment, the server 300 may provide the action plan management model with the second intent and the parameter obtained in operation S920 and a device ID of the determined target device. The action plan management model may be a model that manages information related to detailed operations of a device in order to generate the action plan. The action plan management model may manage the information related to the detailed operations for each device type and relationships between the detailed operations. In an embodiment, the action plan management model may store information corresponding to a parameter value input for performing the detailed operations or a result value output by performing the operations for each type of device.

In an embodiment, operation S930 may be performed by the loT cloud server 400. In this case, the server 300 may transmit the second intent, the parameter, and the identification information of the target device obtained in operation S920 to the loT cloud server 400. The loT cloud server 400 may include the action plan management model.

In operation S940, the server 300 obtains operation information of detailed operations to be performed by the target device from the action plan management model. The action plan management model may identify the target device from the identification information of the target device obtained from the server 300, and obtain, from a memory, previously stored information indicating the detailed operations and relevance between the detailed operations related to the target device.

The action plan management model 210 may generate the operation information to be performed by the target device by identifying detailed operations related to the second intent and the parameter in the information indicating the detailed operations and relevance between the detailed operations and planning the identified detailed operations and an order of performing the detailed operations. The operation information may include information related to the detailed operations to be performed by the device, correlations between the detailed operations, and the order of performing the detailed operations. The operation information may include, for example, at least one of functions to be performed by the target device in order to perform a specific operation, the order of performing the functions, an input value to (e.g., required to) perform the functions, and an output value output as a result of performing the functions but is not limited thereto. The action plan management model may provide the operation information to the server 300, and the server 300 may obtain the operation information from the action plan management model.

In an embodiment, operation S940 may be performed by the loT cloud server 400. The loT cloud server 400 receives the second intent, the parameter, and the identification information of the target device to obtain the operation information including the detailed operations to be performed by the target device and the order of performing the detailed operations.

In operation S950, the server 300 transmits the obtained operation information to the loT cloud server 400 such that a control command may be provided from the loT cloud server 400 to the target device. The server 300 may transmit the operation information and the identification information of the determined target device to the loT cloud server 400.

The loT cloud server 400 may obtain the control command for controlling the detailed operations of the target device based on the operation information and the device identification information received from the server 300. In an embodiment, the loT cloud server 400 may select the control command for controlling the detailed operations of the target device in the operation information, from among control commands of the target device previously stored in a DB. In an embodiment, the loT cloud server 400 may select the DB using the device identification information received from the server 300 and retrieve the control command using the operation information in the selected DB. The control command, which is information readable by the device, may include instructions for the device to perform a function and perform an operation.

The loT cloud server 400 may transmit the control command to the target device.

FIG. 10 is a diagram for describing a method, performed by the server 300, of determining a first intent and a second intent from text and obtaining operation information from the action plan management model 210 according to an embodiment.

Referring to FIG. 10, the server 300 may include the first NLU model 300a, the second NLU model 300b, and the action plan management model 210. Here, an "NLU" is a model for interpreting the text and may be implemented in hardware or software, or in a combination of hardware and software. In an embodiment, the action plan management model 210 may, although not necessarily, be a separate component from the server 300 and may be included in the loT cloud server 400.

In the embodiment shown in FIG. 10, when a user utters "Play the movie Bohemian Rhapsody~," the server 300 may receive a speech signal from the client device 110 and perform ASR to convert the speech signal into the text. The first NLU model 300a is a model trained to interpret the text to obtain the first intent corresponding to the text. The first NLU model 300a may parse the text in units of at least one of morphemes, words, and phrases and infer the meaning of at least one word extracted from the parsed text using linguistic features (e.g., grammatical elements) of the parsed morphemes, words, and/or phrases. The first NLU model 300a may determine the first intent corresponding to the inferred meaning of the word by comparing the inferred meaning of the word with predefined intents. The first intent is information indicating the utterance intention of the user included in the text.

For example, when the text is "Play the movie Bohemian Rhapsody," the first NLU model 300a may segment the text into morphemes, words, etc., such as "Bohemian," "Rhapsody," and "Play." The first NLU model 300a performs a process of tagging a grammatical element, that is, a part-of-speech, a sentence structure, etc., onto each morpheme or word with respect to each of the segmented morphemes or words. The word "Bohemian" may be tagged with an adjective or a modifier, the word "Rhapsody" with a noun or an object, and the word "Play" with a verb or a predicate. The first NLU model 300a derives the relationship of each word by using each word, the position/order of the word and tagging information of the word. That is, the first NLU model 300a determines that "Bohemian" is the adjective or the modifier that modifies "Rhapsody," and the word "Bohemian Rhapsody" that combines "Bohemian" and "Rhapsody" is the noun or the object that is an object of the verb or the predicate "Play." The first NLU model 300a infers the meaning of a verb or a predicate in the text by using a result of analyzing the text using grammatical elements. For example, the first NLU model 300a may infer that "Play" in the text "Play the movie Bohemian Rhapsody" has the meaning that an action of "play something" is performed.

The first NLU model herein determines the first intent corresponding to the meaning inferred above. The first NLU model 300a includes information about a plurality of first intents, and compares information about the meaning inferred above with the information about the plurality of first intents to determine the first intent corresponding to the inferred meaning. For example, the first NLU model 300a may compare "play something" with the information about the plurality of first intents to determine the first intent corresponding to "play something" as "content play."

The first NLU model 300a, which is a model that interprets text without considering a specific device type, may be a more simplified model than the second NLU model 300b. The first NLU model 300a is a model that interprets a word corresponding to a predicate or a verb in the input text. In addition, the first NLU model 300a may be configured to update the entire existing model to a new or updated model through learning to interpret a new text.

The second NLU model 300b is a model trained to interpret text in relation to a specific type of a device. The second NLU model 300b may be applied to specific types of devices and may be a model trained to determine the second intent and parameters related to an operation intended by the user by interpreting text. The second NLU model 300b may parse the text into units of at least one of morphemes, words, and phrases, infer the meaning of the parsed morphemes, words, and/or phrases through grammatical and semantic analysis, and match the inferred meaning with a predefined word to obtain the second intent and the parameter. The second intent, which is information indicating the utterance intention of the user included in the text, may be used to determine an operation to be performed by a specific type of device. The parameter refers to variable information for determining detailed operations of the target device related to the second intent. The parameter is information corresponding to the second intent, and a plurality of types of parameters may correspond to one second intent.

For example, when the text is "Play the movie Bohemian Rhapsody," the second NLU model 300b may segment the text into morphemes, words, etc., such as "Bohemian," "Rhapsody," and "Play." The second NLU model 300b performs a process of tagging a grammatical element, that is, a part-of-speech, a sentence structure, etc., onto each morpheme or word with respect to each of the segmented morphemes or words. The word "Bohemian" may be tagged with an adjective or a modifier, the word "Rhapsody" with a noun or an object, and the word "Play" with a verb or a predicate. The second NLU model 300b derives the relationship of each word by using each word, the position/order of the word and tagging information of the word. That is, the second NLU model 300b determines that "Bohemian" is the adjective or the modifier that modifies "Rhapsody," and the word "Bohemian Rhapsody" that combines "bohemian" and "Rhapsody" is the noun or the object that is an object of the verb or the predicate "Play." The second NLU model 300b may infer that the text "Play the movie Bohemian Rhapsody" has the meaning that an action of "play something" is performed, and "something" is an object "Bohemian Rhapsody."

Here, the second NLU model 300b may obtain a result analyzed by the first NLU model 300a and additionally perform some operations to determine the second intent and the parameter. For example, the second NLU model 300b may receive relationship information of each word included in the text analyzed by the first NLU model 300a. In this case, the second NLU model 300b may receive information that "Bohemian" is an adjective or a modifier that modifies "Rhapsody," and the word "Bohemian Rhapsody" that combines "Bohemian" and "Rhapsody" is a noun or an object that is an object of a verb or a predicate "Play" from the first NLU model 300a. The second NLU model 300b may infer that the text "Play the movie Bohemian Rhapsody" has the meaning that an action of "play something" is performed, and an object on which the action is performed is "Bohemian Rhapsody."

In addition, the second NLU model 300b may analyze at least a part of the converted text input to the first NLU model 300a. For example, when a device name is included in the converted text, the second NLU model 300b may receive and analyze the remaining text after deleting the device name from the converted text. Deleting the device name from the converted text may be performed by the first NLU model 300a or may be performed by the second NLU model 300b.

In an exemplary embodiment, the second NLU model 300b determines the second intent corresponding to the meaning inferred above. The second NLU model 300b includes information about a plurality of second intents, and compares the information about the inferred meaning with the information about the plurality of second intents to determine the second intent corresponding to the inferred meaning.

In addition, the second NLU model 300b includes information about a plurality of parameters that may be objects of the second intent. For example, the second NLU model 300b compares information about an object "Bohemian Rhapsody" with the information about the plurality of parameters, and determines a parameter related to the second intent.

For example, when the device type is a "TV," the second NLU model 300b may compare the inferred meaning "play something" extracted by parsing the text "Play the movie Bohemian Rhapsody~" with the information about the plurality of second intents included in the second NLU model 300b and, based on a numerical value indicating a degree of relevance between the information about the plurality of second intents and "play something," determine "movie content play" as the second intent. The second NLU model 300b determines the numerical value indicating the degree of relevance in consideration of the device type. Considering that the device type is the TV, a first numerical value indicating the degree of relevance between "Play" and movie content play may be greater than a second numerical value indicating the degree of relevance between "Play" and music content play. Accordingly, when the device type is the TV, the second NLU model 300b may determine "movie content play" as the second intent related to "Play."

In another example, when the device type is a speaker, interpreting the same text through the second NLU model 300b may result in the second numerical value indicating the degree of relevance between "Play" and music content play being greater than the first numerical value indicating the degree of relevance between "Play" and movie content play. In this case, the second NLU model 300b may determine "music content play" as the second intent related to "Play."

Because the second NLU model 300b determines the second intent by interpreting the text by reflecting an attribute according to the type of the specific device, the second intent may be or include more specific information than the first intent. The second NLU model 300b is a model that analyzes words corresponding to objects or nouns, modifiers, or adjectives as well as predicates or verbs in the input text. Accordingly, the second NLU model 300b may take longer to interpret the text than the first NLU model 300a and/or may interpret the text by utilizing more information stored in the memory. In addition, the second NLU model 300b may be configured to add a model corresponding to a new device to the existing model in order to interpret text related to the new device.

The second NLU model 300b may determine the parameter by interpreting the text in consideration of the device type. When a plurality of pieces of variable information indicating the parameter is obtained as a result of analyzing the text, the second NLU model 300b may determine variable information having a maximum numerical value corresponding to each piece of variable information as the parameter. For example, when the device type is the TV, the second NLU model 300b may compare "Bohemian Rhapsody" extracted by parsing the text "Play the movie Bohemian Rhapsody~" with information about the plurality of parameters included in the second NLU model 300b and determine the parameter related to the second intent. In this case, the second NLU model 300b may compare the information of the plurality of parameters related to the second intent among the information about the plurality of parameters with "Bohemian Rhapsody" extracted from the text and determine the parameter corresponding to "Bohemian Rhapsody." When the second intent is determined to be "movie content play," the second NLU model 300b determines a parameter corresponding to "Bohemian Rhapsody" among a plurality of parameters related to the movie content. In another example, when the second intent is determined to be "music content play," the second NLU model 300b determines a parameter corresponding to "Bohemian Rhapsody" among a plurality of parameters related to the music content.

The server 300 may provide the determined second intent and parameter to the action plan management model 210 and obtain operation information related to the second intent and the parameter from the action plan management model 210. In an embodiment, the server 300 may provide the action plan management model 210 with identification information of the type of the target device, as well as the second intent and the parameter.

The action plan management model 210 may manage information about detailed operations of a device for each device type and relationships between the detailed operations. The action plan management model 210 may identify the target device from the obtained identification information of the target device, and obtain, from a memory, previously stored information indicating the detailed operations and correlations between the detailed operations related to the target device. The action plan management model 210 may obtain the operation information by selecting detailed operations related to the second intent and the parameter from the information about the detailed operations of the target device and relations between the detailed operations and planning an order of performing the selected detailed operations.

In the embodiment shown in FIG. 10, the action plan management model 210 may obtain the operation information by obtaining identification information of the target device type, i.e., ID information of a TV type, identifying a plurality of detailed operations (operations A to C) for playing the movie Bohemian Rhapsody, and planning the order of performing the plurality of detailed operations (operations A to C). Here, the operation information may include, for example, functions to be performed by the target device to perform a specific operation, an order of performing the functions, an input value for (e.g., used or necessary for) performing the functions, and an output value output as a result of performing the functions but is not limited to thereto.

The action plan management model 210 may obtain the operation information by, for example, selecting the operation A of executing a movie player application, operation B of retrieving the movie Bohemian Rhapsody within a network or local storage, and the operation C of playing the retrieved movie Bohemian Rhapsody, and planning the order of execution of the selected operations A to C.

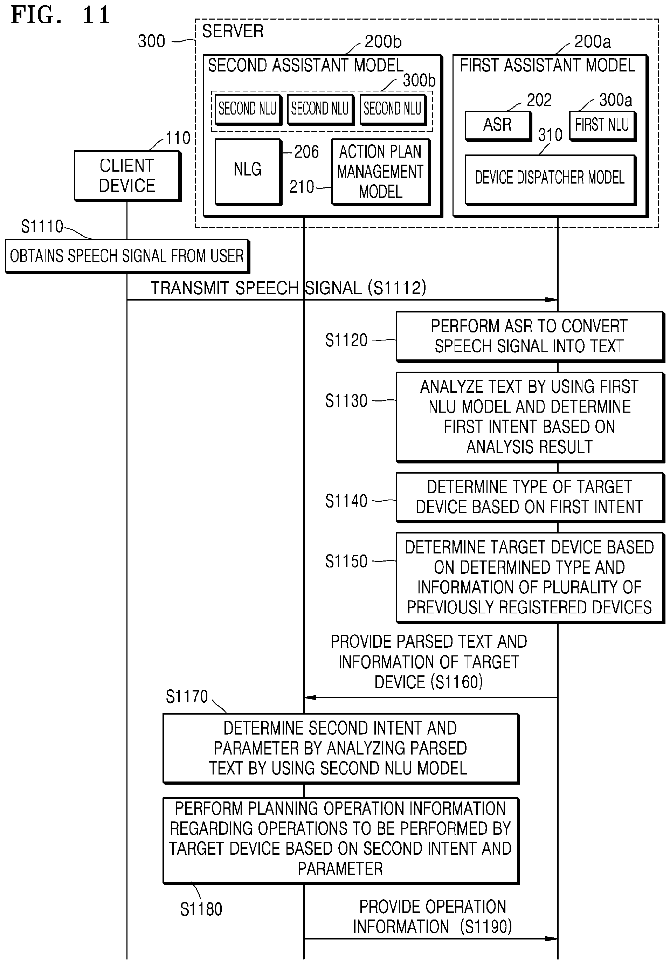

FIG. 11 is a flowchart illustrating operations of the client device 110, the server 300, and the loT cloud server 400 according to an embodiment.

Referring to FIG. 11, the server 300 may include a first assistant model 200a and a second assistant model 200b. In FIG. 11, the second assistant model 200b is a component included in the server 300, but is not limited thereto. For example, according to another embodiment, the second assistant model 200b may be a separate component from the server 300, and/or may be included in the loT cloud server 400.

The first assistant model 200a and the second assistant model 200b are components included in the server 300 and may be implemented in hardware or software, or in a combination of hardware and software. In an embodiment, the first assistant model 200a and the second assistant model 200b may include any one or at least two sets of a program code including instructions, an application, algorithm, routine, a set of instructions, an AI learning model, etc.

In operation S1110, the client device 110 obtains a speech signal from a user. When the user utters, the client device 110 may receive a speech input of the user through a microphone. The client device 110 may obtain the speech signal by converting sound received through the microphone into an acoustic signal and removing noise (e.g., a non-speech component) from the acoustic signal.

In operation S1112, the client device 110 transmits the speech signal to the server 300.

In operation S1120, the first assistant model 200a converts the speech signal into text by performing ASR by using the ASR model 202. In an embodiment, the ASR model 202 of the first assistant model 200a may perform ASR of converting the speech signal into a computer-readable text by using a predefined model such as an AM or an LM. When the first assistant model 200a receives an acoustic signal from which noise is not removed from the client device 110, the ASR model 202 may remove the noise from the received acoustic signal to obtain the speech signal and perform ASR on the speech signal.

In operation S1130, the device dispatcher model 310 of the first assistant model 200a analyzes the text by using the first NLU model 300a and determines a first intent based on an analysis result. The first NLU model 300a may be a model trained to interpret text to obtain the first intent corresponding to the text. Here, the first intent may be information indicating the utterance intention of a user included in the text. The device dispatcher model 310 may determine the first intent of the user from the converted text by performing syntactic analysis or semantic analysis by using the first NLU model 300a. In an embodiment, the device dispatcher model 310 may parse the converted text in units of at least one of morphemes, words, and phrases, and infer the meaning of a word extracted from the parsed text using linguistic features (e.g., grammatical elements) of the parsed morphemes, words, and/or phrases, by using the first NLU model 300a. The device dispatcher model 310 may determine the first intent corresponding to the inferred meaning of the word by comparing the inferred meaning of the word with predefined intents provided by the first NLU model 300a.

In operation S1140, the device dispatcher model 310 may determine the type of a target device based on the first intent. In an embodiment, the device dispatcher model 310 may determine the type of the target device by utilizing the first intent obtained by using the first NLU model 300a.

In an embodiment, the device dispatcher model 310 may determine a target device type related to the first intent recognized from the text based on a matching model that may determine relevance between the first intent and the target device type. The relevance between the first intent and the target device type may be calculated or determined with a predetermined numerical value. In an embodiment, the relevance between the first intent and the target device type may be calculated as a probability value.

The device dispatcher model 310 may determine the target device type related to the first intent among the plurality of target device types by applying the matching model to the first intent obtained from the first NLU model 300a. In an embodiment, the device dispatcher model 310 may obtain a plurality of numerical values indicating a degree of relevance between the first intent and the plurality of target device types by applying the matching model to the first intent and obtain the target device type as having the maximum value among the obtained plurality of numerical values as a final type.

In operation S1150, the device dispatcher model 310 determines the target device based on the determined type and device information of a plurality of previously-registered devices. In an embodiment, the device dispatcher model 310 may receive device information of the plurality of previously-registered devices with respect to account information of the user from the loT cloud server 400. The device dispatcher model 310 may receive, for example, at least one of function capability information, position information, and state information of the plurality of previously-registered devices in relation to the account information of the user from the loT cloud server 400. Here, the state information may include at least one of whether the plurality of devices is powered on/off, information about operations currently performed by the plurality of devices, information about settings of devices (e.g., a volume setting, connected device information and/or settings, etc.), etc.

The device dispatcher model 310 may select a plurality of devices corresponding to the type determined in operation S1140 from among the plurality of previously-registered devices in relation to the account information of the user, and determine the target device based on the state information of the plurality of selected devices. In an embodiment, the device dispatcher model 310 may determine a device located at a position close to the position of the user as the target device in consideration of installation position (or location) information of the plurality of selected devices. In another embodiment, the device dispatcher model 310 may determine the target device based on at least one of whether the plurality of selected devices is powered on/off, state information about operations currently performed by the plurality of selected devices, information about settings of devices (e.g., a volume setting, connected device information and/or settings, etc.), etc.

In operation S1160, the first assistant model 200a provides the parsed text and the target device information to the second assistant model 200b. In an embodiment, the device dispatcher model 310 may provide the identification information (the device ID) of the determined target device to the second assistant model 200b along with the parsed text.

In operation S1170, the second assistant model 200b determines a second intent and a parameter by analyzing the parsed text by using the second NLU model 300b corresponding to the type of the target device determined in operation S1140 among the plurality of second NLU models 300b. In an embodiment, the second assistant model 200b may infer the meaning of words or phrases extracted from the parsed text by using the second NLU model 300b, match the inferred meaning with a predefined word and parameter and determine the second intent and the parameter. The second intent is information indicating the utterance intention of the user included in the text, and may be used to determine an operation to be performed by a specific type of a device. The parameter is variable information for determining detailed operations of the target device related to the second intent. The parameter is information related to the second intent, and a plurality of kinds of parameters may correspond to one second intent.

In operation S1180, the action plan management model 210 of the second assistant model 200b obtains or determines planning operation information of operations to be performed by the target device based on the second intent and the parameter. The action plan management model 210 may identify the target device from identification information of the target device obtained from the device dispatcher model 310 and interpret the operations to be performed by the target device based on the second intent and the parameter. The action plan management model 210 may select detailed operations related to interpreted operations from among operations for each previously-stored device and plan or determine an order of performing the selected detailed operations. The action plan management model 210 may obtain operation information about detailed operations to be performed by the target device using a planning result. The operation information may include information related to the detailed operations to be performed by the device, correlations between the detailed operations, and the order of performing the detailed operations. The operation information may include, for example, functions to be performed by the target device in order to perform detailed operations, the order of performing the functions, an input value to (e.g., required to) perform the functions, and an output value output as a result of performing the functions, but is not limited thereto.

In operation S1190, the second assistant model 200b provides the first assistant model 200a with the operation information obtained through the action plan management model 210.

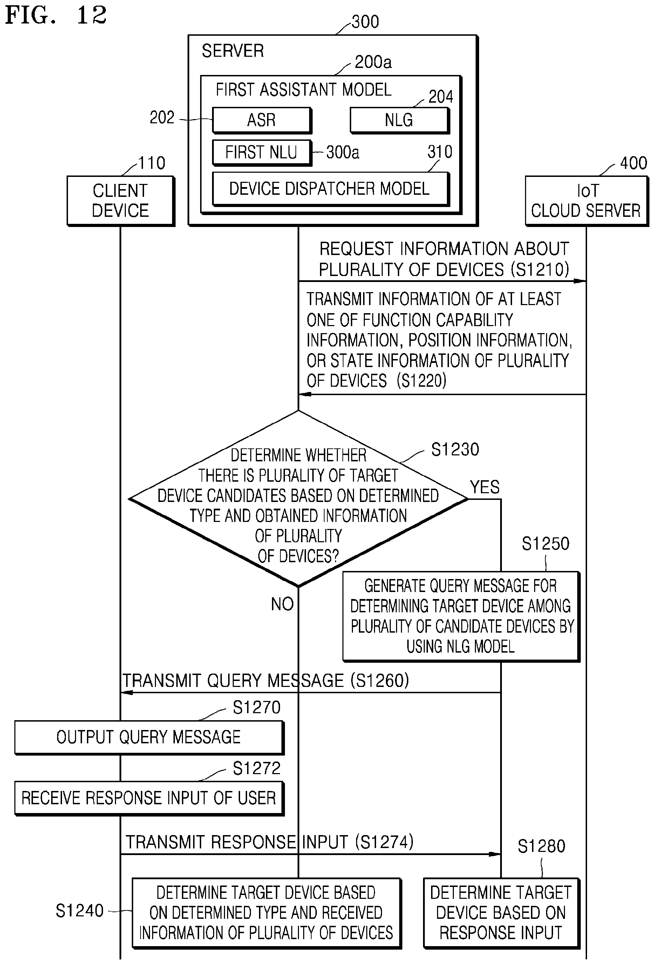

FIG. 12 is a flowchart illustrating operations of the client device 110, the server 300, and the loT cloud server 400 according to an embodiment. FIG. 12 is a diagram illustrating a specific embodiment of operation S1150 of FIG. 11. In FIG. 12, for convenience of explanation, the server 300 includes only the first assistant model 200a, but is not limited thereto. The server 300 may further include the second assistant model 200b as shown in FIG. 11. In FIG. 12, the first assistant model 200a may include the ASR model 202, the NLG model 204, the first NLU model 300a, and the device dispatcher model 310.

In operation S1210, the server 300 requests (e.g., transmits a request for) device information of a plurality of devices from the loT cloud server 400. The server 300 may transmit a signal for requesting the device information of the plurality of devices previously-registered in the loT cloud server 400 to the loT cloud server 400 in relation to account information of a user. The loT cloud server 400 may be a server that stores the device information of the plurality of previously-registered devices of the user for each user account. The loT cloud server 400 may be separate from the server 300 and may be connected to the server 300 through a network. In an embodiment, the server 300 may transmit the account information (e.g., a user ID) of the user obtained from the client device 110 to the loT cloud server 400 and request the device information of the plurality of previously-registered devices of the user from the loT cloud server 400 in relation to the account information of the user.

In an embodiment, the server 300 may transmit type information about the determined target device type to (or toward) the loT cloud server 400. In this case, the server 300 may request only information about a device corresponding to the determined type from among the plurality of devices previously registered in the account information of the user from the loT cloud server 400.

In an embodiment, the server 300 may store the device information of the plurality of previously-registered devices of the user for each user account. In this case, the server 300 does not request the device information from the loT cloud server 400 but may use the device information of the plurality of previously-registered devices of the user in relation to the account information of the user stored in the server 300. In addition, the server 300 may use the information about the determined target device type to obtain only the information about the device corresponding to the determined target device type among the plurality of previously-registered devices of the user.

In operation S1220, the loT cloud server 400 may transmit information of at least one of function capability information, position information, or state information of the plurality of previously-registered devices in relation to the account information of the user to the server 300.

In an embodiment, when the loT cloud server 400 obtains the type information about the target device type from the server 300, the loT cloud server 400 may transmit only information about a device corresponding to a specific type based on the type information from among the plurality of previously-registered devices in relation of the account information of the user to the server 300.

In operation S1230, the server 300 determines whether there is a plurality of target device candidates based on the determined type and the obtained information of the plurality of devices by using the device dispatcher model 310 of the first assistant model 200a. In an embodiment, when (or based on) there is one target device type, the device dispatcher model 310 may determine a target device candidate based on state information of a device corresponding to the target device type or installation position information, and determine whether there is a plurality of determined target device candidates.

In another embodiment, when (or based on) there is a plurality of types of target devices, the device dispatcher model 310 may determine a target device candidate based on state information or installation position information of each of a plurality of devices corresponding to the plurality of types, and determine whether there is a plurality of determined target device candidates.

When (or based on) it is determined in operation S1230 that there is one target device type (NO), the server 300 determines, based on the determined type and the received information of the plurality of devices, one target device as a final target device by using the device dispatcher model 310 of the first assistant model 200a (operation S1240).

When (or based on) it is determined in operation S1230 that there is a plurality of target device candidates (YES), the server 300 generates or obtains a query message for determining the target device among the plurality of candidate devices by using the NLG model 204 of the first assistant model 200a (operation S1250). The server 300 may generate the query message for selecting any one target device from the plurality of devices corresponding to the specific type by using the NLG model 204. The server 300 may perform a disambiguation operation of determining the target device among the plurality of candidate devices. In operation S1250, the server 300 may generate the query message that induces or requests a response of the user regarding which of the plurality of devices to determine as the target device by using the NLG model 204.

In an embodiment, the query message may be a message including a list listing the plurality of devices corresponding to the specific type and requesting the user to select the target device from among the plurality of devices included in the list. In another embodiment, the query message may be a message to select the plurality of device candidates according to an installation position. It is understood, however, that these are just examples and one or more other embodiments are not limited thereto. For example, according to another embodiment, the query message may simply request that the user provide a more specific or explicit utterance of the target device.

In operation S1260, the server 300 transmits the generated query message to the client device 110. In an embodiment, the first assistant model 200a of the server 300 may convert a query message configured as text into an audio signal through TTS. The server 300 may transmit the query message converted into the audio signal to the client device 110. However, the disclosure is not limited thereto. When the client device 110 is a device including a display, the server 300 may transmit the query message in the form of text data to the client device 110.

In operation S1270, the client device 110 outputs the received query message from the server 300. In an embodiment, the client device 110 may output the query message converted into the audio signal through a speaker. In another embodiment, when the client device 110 is the device including the display, the client device 110 may display the query message on the display.

In operation S1272, the client device 110 receives a response input of the user. In an embodiment, the client device 110 may receive the response input of the user that selects any one device from among the plurality of candidate devices. The response input of the user may be the name of the selected device, but is not limited thereto. In an embodiment, the response input of the user may be an order listed in a list including the plurality of candidate devices, that is, the ordinal (e.g., a second device). In another embodiment, the response input of the user may simply be another utterance that more specifically provides the user's intent of the target device or more explicitly identifies the target device.

In operation S1274, the client device 110 transmits the response input received from the user to the server 300. The response input of the user may be transmitted from the client device 110 in the form of a speech signal.

In operation S1280, the server 300 determines the target device based on the response input by using the first assistant model 200a. In an embodiment, the server 300 may extract a word about the target device selected by the user by converting the received response input received by using the ASR model 202 into text through an ASR process and analyzing the converted text by using the first NLU model 300a. The server 300 may interpret the meaning of the extracted word by using the first NLU model 300a and determine the target device based on the extracted word. In an embodiment, the ASR model 202 and the first NLU model 300a that convert the response input of the user into the text through the ASR process and match the converted text with a predefined text to determine the meaning of the text may be different from models described with reference to FIGS. 2A and 2B. However, the disclosure is not limited thereto, and the server 300 may use at least one of the models described with reference to FIGS. 2A and 2B.

In an embodiment, the device dispatcher model 310 of the server 300 may determine the target device matching a specific order based on the response input of the user that selects the specific order from a list of candidate devices included in the query message. According to another embodiment, if the server 300 is unable to determine the target device based on the response input of the user, operations S1250 to S1280 may be repeated a predetermined number of times.

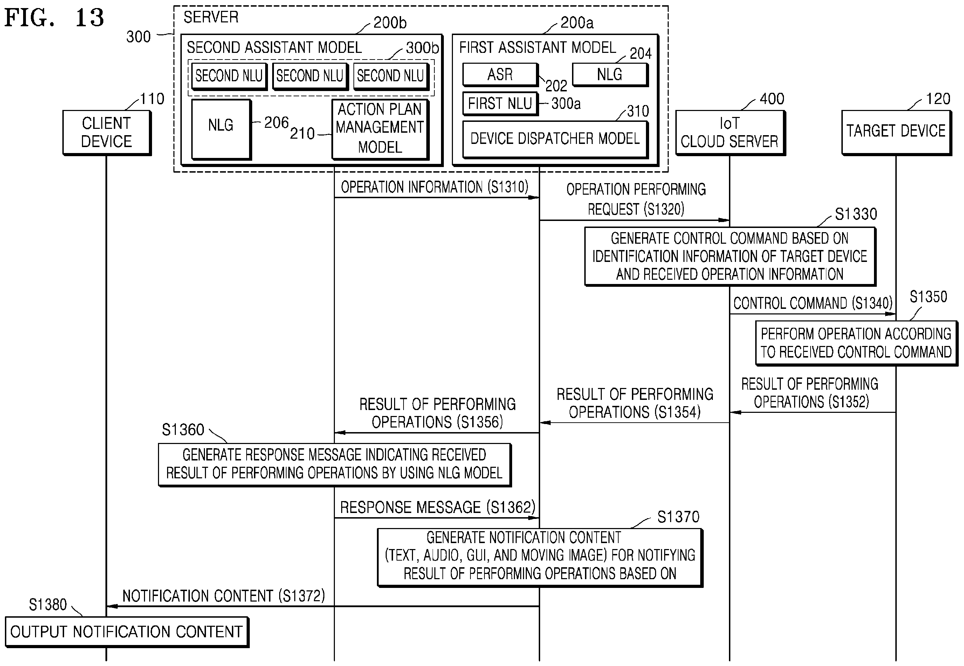

FIG. 13 is a flowchart illustrating operations of the client device 110, the target device 120, the server 300, and the loT cloud server 400 according to an embodiment. FIG. 13 illustrates in detail the operations performed by the client device 110, the target device 120, the server 300, and the loT cloud server 400 after operation S1190 of FIG. 11.

Referring to FIG. 13, in operation S1310, the second assistant model 200b provides operation information to the first assistant model 200a. Operation S1310 is the same as or similar to operation S1190 of FIG. 11.

In operation S1320, the first assistant model 200a transmits operation performing request information to the loT cloud server 400. In an embodiment, the first assistant model 200a may transmit operation information and identification information (e.g., a device ID) of the target device 120 to the loT cloud server 400. In an embodiment, the first assistant model 200a may transmit interaction information to the loT cloud server 400. Here, the interaction information may include at least one of text obtained by converting a speech input of a user received by the ASR model 202 of the server 300 through the client device 110, a query message generated by the server 300 by using an NLG model using the NLG models 204 and 206, or text obtained by converting a response input of the user.

In operation S1330, the loT cloud server 400 obtains, generates, or determines a control command based on the identification information of the target device 120 and the operation information received from the first assistant model 200a. In an embodiment, the loT cloud server 400 may generate the control command for causing the target device 120 to perform detailed operations in the operation information based on the operation information. The generated control command is transmitted to the target device 120, and the target device 120 may sequentially perform the detailed operations in the operation information according to a performing order by reading the generated control command. It is understood, however, that the disclosure is not limited thereto. For example, according to another embodiment, the loT cloud server 400 may store the control command corresponding to the operation information and the identification information of the target device 120.

In operation S1340, the loT cloud server 400 transmits the control command obtained, generated, or determined in operation S1330 to the target device 120 using identification information of the target device 120.

In operation S1350, the target device 120 performs operations corresponding to the control command according to the received control command.

In operation S1352, when (or based on) performing of the operations successfully completes or fails, the target device 120 transmits a result of performing the operations to the loT cloud server 400. When (or based on) the performing of the operations fails, the target device 120 transmits the result of performing the operations to the loT cloud server 400 together with the reason for failure of the performing of the operations.

In operation S1354, the loT cloud server 400 transmits the result of performing the operations to the first assistant model 200a.

In operation S1356, the first assistant model 200a transmits the result of performing the operations to the second assistant model 200b. In an embodiment, the first assistant model 200a may transmit information about a type of the target device 120 together with the result of performing the operations.

In operation S1360, the second assistant model 200b generates, obtains, or determines a response message indicating the result of performing the operations by using the NLG model 206. In an embodiment, the second assistant model 200b may generate, obtain, or determine the response message corresponding to the result of performing the operations based on the received information about the type of the target device 120. The response message may be a message indicating a performing result that an operation is performed by the target device 120.

For example, when the target device 120 is a TV and the TV performs an operation of playing a movie, the second assistant model 200b may generate the response message "The TV has played the movie" based on a performing result of a movie playing operation received from the server 300 .

In another example, when the target device 120 is a speaker and the speaker fails to perform an operation of increasing the volume, the second assistant model 200b may generate the response message "the volume increase failed because the volume is at its highest state" based on a result of performing a volume increase operation and the reason for failure received from the server 300. In this case, the performing result received from the server 300 may be a "failure," and the reason for failure received with the performing result may be that "the current volume is in the highest state."

In operation S1360, the second assistant model 200b uses the NLG model 206 to generate, obtain, or determine the response message according to the operation performing result, but is not limited thereto. For example, according to another embodiment, the response message may be previously stored together with an action plan for each device type in the action plan management model 210. The action plan management model 210 may identify a response message corresponding to the received operation performing result in the previously-stored response message and obtain the identified response message.

In operation S1362, the second assistant model 200b transmits the response message to the first assistant model 200a.

In operation S1370, the first assistant model 200a generates notification content for notifying the operation performing result, based on the response message. In an embodiment, the first assistant model 200a may determine at least one of text, audio, image, or moving image as a format of the notification content, and generate or obtain the notification content according to the determined format.

The first assistant model 200a may perform a TTS function of converting text into speech to convert the response message in the format of the text into an audio signal. In an embodiment, the server 300 may generate an image based on a layout corresponding to a layout key received from the target device 120.

In operation S1372, the first assistant model 200a of the server 300 transmits the notification content to the client device 110. In an embodiment, the server 300 may transmit the notification content to the target device 120. The server 300 may determine a device to which the notification content is to be provided according to a predefined rule. The predefined rule includes information about a format of the corresponding notification content for each operation. In addition, the predefined rule may additionally include information about a device to output the notification content.

For example, the movie playing operation is defined to output notification content in the format of audio and to be provided by the client device 110 that transmits a speech input of a user. When the notification content with respect to the movie playing operation is defined to be output in the format of audio and to be provided by the client device 110, the server 300 may convert the notification content into the format of audio and transmit the notification content to the client device 110.

In operation S1380, the client device 110 outputs the notification content. When the notification content is in the format of audio, the client device 110 may output the notification content through the speaker. When the notification content is an image, the client device 110 may display the notification content on a display.

FIG. 14 is a block diagram illustrating the client device 110, the server 300, and the loT cloud server 400 according to an embodiment.

The client device 110 may be configured to include at least a microphone 112, a processor 114 (e.g., at least one processor), a memory 116, and a communication interface 118. The client device 110 may receive a speech input (e.g., utterance) from a user through the microphone 112 and obtain a speech signal from the speech input of the user. The client device 110 may control the communication interface 118 through the processor 114 and transmit the speech signal to the server 300 through the communication interface 118. In an embodiment, the processor 114 of the client device 110 may convert sound received through the microphone 112 into an acoustic signal and remove noise (e.g., a non-speech component) from the acoustic signal to obtain the speech signal.

The memory 116 may previously store at least one of identification information of the client device 110 (e.g., ID information of the client device 110) and account information of the user (e.g., ID information of the user). In an embodiment, when transmitting the speech signal to the server 300 through the communication interface 118 under the control of the processor 114, the client device 110 may transmit the identification information of the client device 110 (e.g., ID information of the client device 110) and/or the account information of the user (e.g., ID information of the user) that is previously stored in the memory 116.

The server 300 may include a communication interface 302, a processor 304 (e.g., at least one processor), and a memory 306.

The communication interface 302 may perform data communication with the client device 110 and the loT cloud server 400 using at least data communication method, for example, at least one of wired LAN, wireless LAN, Wi-Fi, Bluetooth, Zigbee, Wi-Fi Direct (WFD), Infrared Data Association (IrDA), Bluetooth Low Energy (BLE), Near Field Communication (NFC), Wireless Broadband Internet (Wibro), World Interoperability for Microwave Access (WiMAX), Shared Wireless Access Protocol (SWAP), Wireless Gigabit Alliance (WiGig), or RF communication.

The processor 304 may execute one or more instructions of a program stored in the memory 306. The processor 304 may include hardware components that perform arithmetic, logic, input/output operations and signal processing. The processor 304 may include at least one of, for example, a central processing unit, a microprocessor, a graphics processing unit, application specific integrated circuits (ASICs), digital signal processors (DSPs), Digital Signal Processing Devices (DSPDs), Programmable Logic Devices (PLDs), or Field Programmable Gate Arrays (FPGAs), but is not limited thereto.

The memory 306 may store the program including instructions for determining a target device to perform an operation from the speech input of the user. The memory 306 may store instructions and program code that the processor 304 may read. In the following description, the processor 304 may be implemented by executing instructions or codes of the program stored in the memory 306.

Also, data corresponding to the first assistant model 200a and the second assistant model 200b may be stored in the memory 306. The data corresponding to the first assistant model 200a may include at least data with respect to the ASR model 202, data with respect to the NLG model 204, data with respect to the first NLU model 300a, and data with respect to the device dispatcher model 310. The data corresponding to the second assistant model 200b includes at least data with respect to the plurality of second NLU models 300b, data with respect to the NLG model 206, data with respect to the action plan management model 310, etc.

The memory 306 may include, for example, at least one type of storage medium, from among a flash memory type storage medium, a hard disk type storage medium, a multi-media card micro type storage medium, a card type memory (for example, an SD or an XD memory), random-access memory (RAM), static RAM (SRAM), read-only memory (ROM), electrically erasable programmable ROM (EEPROM), programmable ROM (PROM), a magnetic memory, a magnetic disk, an optical disk, etc.

The processor 304 may include, for example, at least one of a central processing unit (CPU), a microprocessor, a graphics processing unit (GPU), an application specific integrated circuit (ASIC), a digital signal processor (DSP), a digital signal processing device (DSPD), a programmable logic device (PLD), or a field programmable gate array (FPGA), but it is not limited thereto.

The processor 304 may control the communication interface 302 to receive the speech signal from the client device 110. The processor 304 may perform ASR using data with respect to the ASR model 202 stored in the memory 306 and convert the speech signal received from the client device 110 into text.

The processor 304 may analyze the converted text using the data with respect to the first NLU model 300a stored in the memory 306 and, based on an analysis result of the text, determine a type of at least one target device In an embodiment, the processor 304 may parse the text in units of at least one of morphemes, words, and phrases and infer the meaning of a word extracted from the parsed text using linguistic features (e.g., grammatical elements) of the parsed morphemes, words, or phrases, using the data with respect to the first NLU model 300a stored in the memory 306. The processor 304 may determine a first intent corresponding to the inferred meaning of the word by comparing the inferred meaning of the word with predefined intents provided by the first NLU model 300a.

The processor 304 may determine the target device type related to the first intent recognized from the text based on a matching model capable of determining relevance between the first intent and the target device type. In an embodiment, the matching model is included in the data with respect to the device dispatcher model 310 stored in the memory 306, and may be obtained through learning using a rule-based system, but is not limited thereto. The device dispatcher model 310 may be configured separately from the first NLU model 300a, but is not limited thereto. The device dispatcher model 310 may be configured to include the first NLU model 300a.

In an embodiment, the processor 304 may control the communication interface 302 to receive information about a plurality of devices previously registered with the loT cloud server 400 in relation to the account information of the user. The account information of the user is information stored in the memory 116 of the client device 110. The server 300 may receive the account information of the user through communication between the communication interface 302 and the communication interface 118 of the client device 110.

The loT cloud server 400 may be a server that stores the device information of the plurality of previously-registered devices of the user for each user account. The loT cloud server 400 may be separate from the server 300 and may be connected to the server 300 through a network. According to another embodiment, the server 300 and the loT server 400 may be integrated in one server. The loT cloud server 400 may include at least a communication interface 402, a processor 404 (e.g., at least one processor), and a memory 406. The memory 406 of the loT cloud server 400 may store at least one of identification information, function capability information, position information, state information, device name information, a control command, etc., for each device of the plurality of previously-registered devices for each user account. The loT cloud server 400 may be connected to the server 300 or the target device 120 through the communication interface 402 over a network and may receive or transmit data. The loT cloud server 400 may transmit data stored in the memory 406 to the server 300 or the target device 120 through the communication interface 402 under the control of the processor 404. In addition, the loT cloud server 400 may receive data from the server 300 or the target device 120 through the communication interface 402 under the control of the processor 404.

The processor 304 may control the communication interface 302 and, through the communication interface 302, receive device information including at least one of the identification information (e.g., a device ID), the function capability information, the position information, or the state information of the plurality of previously-registered devices in relation to the account information of the user from the loT cloud server 400. Here, the state information may be information indicating, for example, a current state of a device, such at least one of power on/off information of the plurality of devices, information about operations currently performed by the plurality of devices, information about settings of devices (e.g., a volume setting, connected device information and/or settings, etc.), etc.

The processor 304 may determine the target device based on the determined target device type and the device information of the plurality of devices previously registered in the account of the user, using the data with respect to the first assistant model 200a stored in the memory 306.

In an embodiment, the processor 304 may extract a common name related to the type of the device and a word or a phrase about an installation position of the device from the text and determine the target device based on the extracted common name and installation position of the device, using the data with respect to the first NLU model 300a stored in the memory 306.

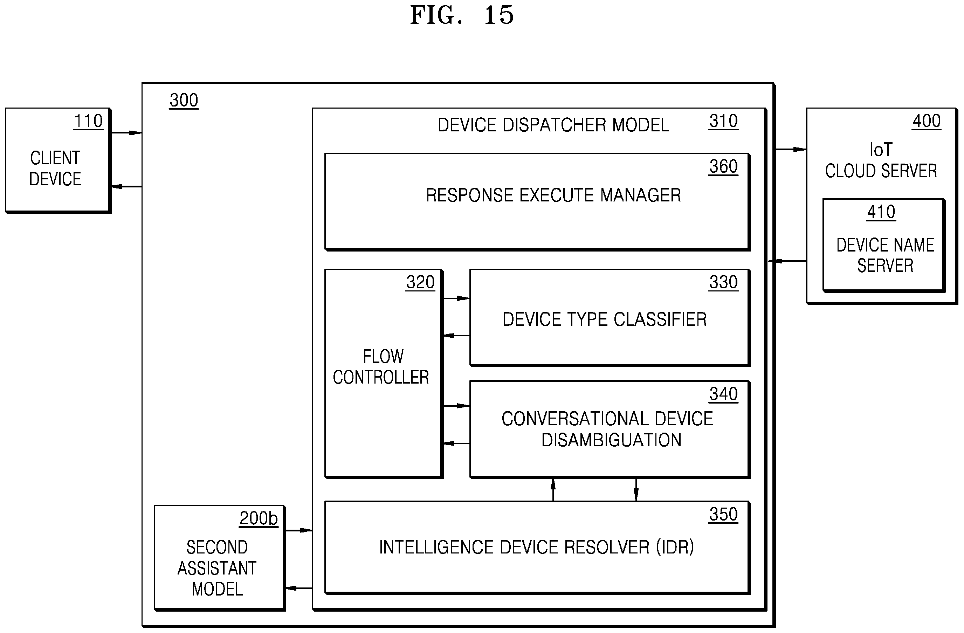

In an embodiment, the processor 304 may extract the name of a previously-registered personalized device by the user from the text. The processor 304 may transmit the extracted name of the device to the loT cloud server 400 storing names of the plurality of devices and device identification information corresponding to the name of each device or a device name server 410 (see FIG. 15) by controlling the communication interface 302. The processor 304 may control the communication interface 302 to receive device identification information corresponding to the transmitted name of the device from an external server. Here, the device name server 410 may be a component included in the loT cloud server 400, but is not limited thereto. The device name server 410 may be configured as a server separated from the loT cloud server 400. The names of the plurality of devices stored in the device name server 410 may include a name registered directly by the user and at least one of synonyms, similar words, or slang words of the registered name.

The processor 304 may determine the target device based on the received device identification information using the data with respect to the first assistant model 200a stored in the memory 302. In an embodiment, when there is a plurality of devices corresponding to the determined type, the processor 304 may use the NLG model 204 stored in the memory 302 to generate a query message for selecting the target device from among the plurality of candidate devices. The processor 304 may control the client device 110 to output the generated query message.

The processor 304 uses the second NLU model 300b corresponding to the determined type of the target device among the plurality of second NLU models 300b included in the second assistant model 200b stored in the memory 302 to obtain operation information of the detailed operations to be performed by the target device. In an embodiment, the processor 304 may parse the text into units of morphemes, words, and/or phrases, infer the meaning of the parsed morphemes, words, and/or phrases through grammatical and semantic analysis, and match the inferred meaning with a predefined word to obtain the second intent and the parameter by using the second NLU model 300b. The processor 304 may determine the second intent from the text by using the second NLU model 300b, and may determine an intent specialized to the device type as the second intent rather than the first intent.

The processor 304 may obtain operation information about at least one operation related to the second intent and the parameter by using the action plan management model 210 in the second assistant model 200b stored in the memory 302. The operation information may be information related to the detailed operations to be performed by the device and the order of performing the detailed operations. The action plan management model 210 may manage the information related to the detailed operations for each device type and relationships between the detailed operations. The processor 304 may perform planning of the detailed operations to be performed by the device and the order of performing the detailed operations based on the second intent and the parameter by using the action plan management model 210.

The communication interface 302 transmits the identification information of the determined target device and information about detailed operations of the target device and an order of performing the detailed operations to (or toward) the loT cloud server 400 under the control of the processor 304. The loT cloud server 400 may determine corresponding control commands among a control command for each device stored in the memory 406 under the control of the processor 404, using the identification information of the target device and the information about detailed operations of the target device and the order of performing the detailed operations received through the communication interface 402.

The communication interface 402 of the loT cloud server 400 transmits the determined control commands to the target device through the communication interface 402 under the control of the processor 404. In an embodiment, the processor 404 determines a device to (or toward) which to transmit the control command determined using the identification information of the target device and transmits the control commands to (or toward) the determined device through the communication interface 402. In an embodiment, the processor 404 may receive a result of performing an operation according to the control command in the target device through the communication interface 402.

FIGS. 15 through 19 are diagrams illustrating operations of a program module executed by the server 300 according to an embodiment.

FIG 15 is a diagram illustrating an architecture of a program executed by the server 300 according to an embodiment. The client device 110 and the loT cloud server 400 shown in FIG. 15 are the same components as or similar to the client device 110 and the loT cloud server 400 shown in FIG. 14. In FIG. 15, some of components of the first assistant model 200a are omitted for convenience of description, and illustrations of components included in the second assistant model 200b are omitted. Examples of the components included in each of the first assistant model 200a and the second assistant model 200b are described with reference to FIG. 14.

Referring to FIG. 15, the server 300 may include the second assistant model 200b and the device dispatcher model 310. The device dispatcher model 310 may include a flow controller 320, a device type classifier 330, a conversational device disambiguation 340, an intelligence device resolver (IDR) 350, and a response execute manager 360.

The flow controller 320, the device type classifier 330, the conversational device disambiguation 340, the IDR 350, and the response execute manager 360 may be software modules configured as instructions of the program executed by the server 300 or program codes. Although the software modules are shown as separate configurations in FIG. 15, this is for convenience of description and is not limited as shown.

Further, the device dispatcher model 310 may further include a session manager. The session manager may store information about a session between a plurality of devices previously registered in the loT cloud server 400 and the server 300 in relation to account information of a user, an account, or a device (e.g., a client device). The session manager may also control the transmission and reception of data and instructions between the client device 110 and the device dispatcher model 310 and between the second assistant model 200b and the device dispatcher model 310. In an embodiment, the session manager may store a policy regarding whether to maintain an interaction between a plurality of devices in an interaction with the user or to receive a speech input of the user only through the client device 110. When the session manager receives a speech input that does not specify the name or the type of a specific device from the user, the session manager may select a device that has performed an operation before receiving the speech input and retrieve operation information related to the target device determined in the second assistant model 200b.

The flow controller 320 may receive a speech signal from the client device 110. The flow controller 320 may be a module that controls a data flow in the device dispatcher model 310. The flow controller 320 is connected to the device type classifier 330 and the conversational device disambiguation 340 and controls transmission and reception of data flow for (e.g., necessary for) determining the type of the target device from the speech signal between the device type classifier 330 and the conversational device disambiguation 340.

The device type classifier 330 may determine a target device type related to the speech signal. The device type classifier 330 may perform ASR to convert the speech signal into a computer-readable text. The device type classifier 330 may interpret the text by using a first NLU model, and obtain a first intent that the user intends to perform in the target device based on an analysis result. In an embodiment, the device type classifier 330 may be trained with a matching rule or a matching pattern between the first intent and a related type of the target device by using an AI model and determine the type of the target device according to an intent based on the trained matching rule or matching pattern.

The device type classifier 330 may be trained with the matching rule or the matching pattern between the intent and the target device type using, for example, a rule-based system, but is not limited thereto. The AI model used by the device type classifier 330 may be, for example, a neural network-based system (e.g., a convolution neural network (CNN), a recurrent neural network (RNN), support vector machine (SVM), linear regression, logistic regression, Naive Bayes, random forest, decision tree, a k-nearest neighbor algorithm, etc.). Alternatively, the AI model may be a combination of the foregoing or another AI model.

In an embodiment, the device type classifier 330 may recognize the name of the device from the text and determine the type of the device based on the recognized name of the device. The device type classifier 330 may parse the text into units of words and/or phrases by using the first NLU model, match the parsed words and/or phrases with a predefined device name, and obtain the device name included in the text. For example, when receiving a speech signal "Play the movie Bohemian Rhapsody on the TV" from flow controller 320, the device type classifier 330 may convert the speech signal into text, parse the converted text, and obtain a device name "TV."

In an embodiment, when the device name obtained from the text is a personalized nickname, the device type classifier 330 may transmit a query to the device name server 410 and receive device identification information corresponding to the personalized nickname from the device name server 410. The device name server 410 may be an external server that stores nickname information related to names of a plurality of registered devices. The device name server 410 may be included in the loT cloud server 400, but is not limited thereto. The device name server 410 may be a server separate from the loT cloud server 400. The device name server 410 may store, for example, a personalized vocabulary of at least one of synonyms, similar words, slang words, etc., of the name of each of the plurality of devices registered by the user.

The device name server 410 (or storage) may register and store a device as a personalized word or vocabulary and add or delete the personalized word or vocabulary when (or based on) the user registers the device in account information. For example, when (or based on) the user stores a living room TV in the device name server 410 as "square square," the device type classifier 330 may transmit a query about "square square" to the device name server 410 and receive identification information (ID information) of the "living room TV" corresponding to "square square" from the device name server 410. In an embodiment, the device name server 410 may be in the form of a cloud server, an external storage or a database (DB).

The device type classifier 330 may transmit information about the determined type of the target device to the flow controller 320.

The flow controller 320 transmits the information on the target device type to the conversational device disambiguation 340.

The conversational device disambiguation 340 may disambiguate the target device through an interaction with the user when there is a plurality of devices corresponding to the type determined by the device type classifier 330. The conversational device disambiguation 340 may generate a query message for selecting or determining the target device from among a plurality of target device candidates. The conversational device disambiguation 340 may generate the query message by using an NLG model. The conversational device disambiguation 340 may convert a query message in the form of text into an audio signal by using a TTS model. In an embodiment, the conversational device disambiguation 340 may transmit the query message to the flow controller 320 such that the generated query message is output by the client device 110 that receives the speech input from the user. The conversational device disambiguation 340 may transmit the query message in the form of text to the flow controller 320, but is not limited thereto. The conversational device disambiguation 340 may transmit the query message converted into the audio signal to the flow controller 320.

The flow controller 320 may transmit the query message to (or toward) the client device 110.

When the conversational device disambiguation 340 is to (e.g., needs to) select any one of a plurality of target devices, the conversational device disambiguation 340 may provide information about a previous response input of the user and a target device previously selected by the user according to the existing response input together with the query message.

The conversational device disambiguation 340 may determine the target device based on a response input of the user that selects any one of the plurality of target device candidates included in the query message. The response input of the user may be transmitted in the form of a speech signal from the client device 110. In an embodiment, the conversational device disambiguation 340 may recognize at least one of a common name of the device, an installation position, the order in which the plurality of target device candidates are listed in the query message, etc., from the response input and may determine the target device based on the response input. The conversational device disambiguation 340 may convert the response input received from the client device 110 into text, parse the text into units of words or phrases, and obtain the common name, the installation position, or an ordinal number (a listing order: e.g., a "first device") of the devices included in the text. For example, when the query message includes a list in which the plurality of target device candidates are listed in a predetermined order, the conversational device disambiguation 340 may recognize a device corresponding to the order of a specific target device in the list based on the response input of the user such as "first" or "second" and determine the recognized device as the target device.

The conversational device disambiguation 340 may transmit information about the plurality of target device candidates to the IDR 350.

The IDR 350 may obtain the identification information about the plurality of devices previously registered in the loT cloud server 400 in relation to the account information of the user, the device, etc., and select the target device based on device information of each of the plurality of devices. The device information may include function capability information, position information, and state information of each of the plurality of previously-registered devices in relation to the account information of the user, the device, etc. The state information may include information about at least one of whether the plurality of devices is powered on/off or operations currently performed by the plurality of devices.

The IDR 350 may transmit information about the selected target device to the conversational device disambiguation 340. In an embodiment, the IDR 350 may transmit at least one of the identification information ID, a name, a nickname, a position, a manufacturer, a model ID, function capability, information about a current operation state, etc., of the target device to the conversational device disambiguation 340.

The flow controller 320 may transmit the information about the target device to the session manager. The session manager may transmit the parsed text and the information about the target device to the second assistant model 200b.

The action plan management model 210 of the second assistant model 200b may manage the information related to operations for each device type and relationships between the operations. The second assistant model 200b may determine a second intent and a parameter by interpreting the parsed text by using a second NLU model corresponding to the type of the target device among a plurality of second NLU models. The second assistant model 200b may generate operation information about an operation to be performed by the target device by planning detailed operations to be performed by the device and an order of performing the detailed operations based on the second intent and the parameter. The second assistant model 200b may generate the operation information by performing action planning, for example, related to operation performing of a TV agent or a speaker agent.

The second assistant model 200b may transmit the operation information and the identification information of the target device to the session manager. The session manager may transmit the operation information obtained from the second assistant model 200b to the response execute manager 360. The response execute manager 360 may transmit the operation information and the identification information of the target device to or toward the loT cloud server 400. In an embodiment, the response execute manager 360 may transmit interaction information to the loT cloud server 400. The interaction information may include at least one of text converted from the speech input received from the user, a query message that the server 300 generates by using the NLG model, and text converted from the response input regarding the query message.

The loT cloud server 400 may obtain, determine, or generate a control command for controlling the device by utilizing the received identification information of the target device and operation information. In an embodiment, the loT cloud server 400 may obtain, determine, or generate a control command for allowing, controlling, or instructing the target device to perform detailed operations in the operation information based on the motion information. The control command may be a command for controlling the target device to perform detailed operations according to the operation information. It is understood, however, that the disclosure is not limited thereto, and the loT cloud server 400 may store control commands corresponding to the operation information and the identification information of the target device.

The loT cloud server 400 may transmit the control command to the target device. The target device may sequentially perform the detailed operations in the operation information according to the performing order by reading the generated control command. The loT cloud server 400 may receive a signal regarding an operation performing result, which is a result of executing the control command by the target device, from the target device.

The loT cloud server 400 may transmit the signal regarding the operation performing result to the response execute manager 360.

The response execute manager 360 may generate the notification content based on the operation performing result. In an embodiment, the response execute manager 360 may generate the notification content by using the NLG model. The notification content may be a message indicating a result that the operation is performed by the target device.

The response execute manager 360 may determine at least one of text, audio, image, and moving image as a format of the notification content, and generate or obtain the notification content according to the determined format. The response execute manager 360 may perform a TTS function of converting text into speech to convert the response message in the format of the text into an audio signal.

The response execute manager 360 may transmit the notification content to the session manager.

The session manager may transmit the notification content to the client device 110. The session manager may determine a device to which the notification content is to be provided according to a predefined rule. The predefined rule includes information about a format of the notification content corresponding to each operation. In addition, the predefined rule may additionally include information about a device to output the notification content.

The client device 110 may output the received notification content through a speaker.

In FIG. 15, an embodiment in which the device dispatcher model 310 determines the target device to finally perform the operation through the query message that queries the user regarding which device to select as the target device when there is a plurality of devices corresponding to the determined type in relation to the speech input received from the user is illustrated, but is not limited thereto. In an embodiment, the device dispatcher model 310 may be trained by applying a pair of the first intent recognized from the speech input of the user and the target device finally selected by the user as input and output of an artificial neural network and select the target device using a learning network model generated through a result of training. Here, the device dispatcher model 310 may be trained using a known deep neural network (DNN) such as a convolutional neural network (CNN) or a recurrent neural network (RNN), but is not limited thereto. Through a method of training, the accuracy of determining the target device according to the intention of the user may be improved.

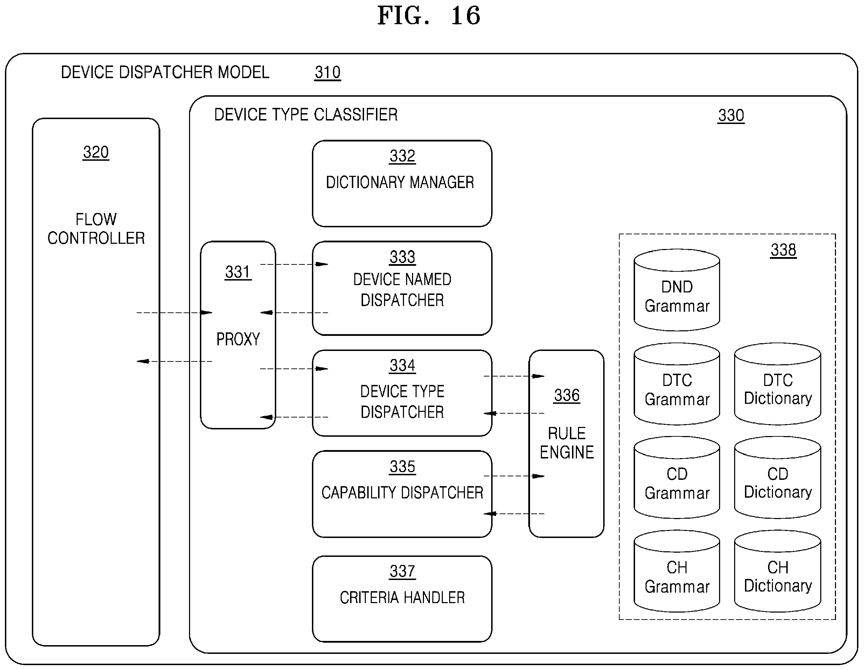

FIG. 16 illustrates the device type classifier 330 of the device dispatcher model 310 according to an embodiment.

Referring to FIG. 16, the device dispatcher model 310 may include the flow controller 320 and the device type classifier 330.

The device type classifier 330 may include a proxy 331, a dictionary manager 332, a device named dispatcher 333, a device type dispatcher 334, a capability dispatcher 335, a rule engine 336, a criteria handler 337, and a grammar 338.

When a device name obtained from a speech input of a user received from a client device is a personalized nickname, the dictionary manager 332 may transmit a query to the device name server 410 (see FIG. 15) and receive identification information of a device corresponding to the personalized nickname from the device name server 410. The dictionary manager 332 may synchronize the personalized nickname of the device included in text converted from the speech input with a vocabulary of at least one of synonyms, similar words, and slang words registered in an external device name server. For example, when (or based on) recognizing the vocabulary "fool box" from the text, the dictionary manager 332 may transmit a query to the device name server 410, and receive identification information of a "living room TV" corresponding to the "fool box." The dictionary manager 332 may synchronize the received identification information of the living room TV with a nickname "fool box."

The device name dispatcher 333 may parse the text converted from the speech input and obtain a name of the device from the parsed text. In an embodiment, the device name dispatcher 333 may perform a syntactic or semantic analysis by using an NLU model and extract a word or a phrase corresponding to the device name from the text. In an embodiment, the device name dispatcher 333 may transmit a query regarding the extracted device name to the dictionary manager 332 and compare the query with a predefined name of the device to recognize the identification information of the device. For example, when text "Play Bohemian Rhapsody on the TV" is received from the proxy 331 of the device type classifier 330, the device named dispatcher 333 may obtain the device name "TV" from the text.

The device type dispatcher 334 may determine the type of device based on the text converted from the speech input. The device type dispatcher 334 may obtain a first intent from the text by using a first NLU model and determine the device type matching with the first intent obtained based on a matching rule previously stored in the rule engine 336. A detailed method of determining the first intent from the text by using the first NLU model is the same as or similar to a method performed by the server 300 of determining the target device type from the first intent described with reference to FIG. 5.

The capability dispatcher 335 may determine the target device type based on a function capability related to an operation indicated by the first intent. For example, at least one function may match with respect to the operation indicated by the first intent. The capability dispatcher 335 may determine the target device type by identifying a device capable of performing the function matching with the first intent based on function capability information of the device. Here, the function capability information may be information about a function performable by the device. For example, the function capability of a mobile phone may include SNS, map, telephone, the Internet, etc., the function capability of the TV may include content play, and the function capability of an air conditioner may include air temperature control.

When the device type dispatcher 334 and the capability dispatcher 335 are configured as a program code or algorithm, the grammars 338 of the rule engine 336 may be used to perform the above-described functions. When the device type dispatcher 334 and the capability dispatcher 335 are implemented as a machine learning or neural network model, the rule engine 336 and the grammar 338 may be omitted.

When there is a plurality of devices corresponding to the determined type, the criteria handler 337 may store mapping information between an order in which a plurality of candidate devices are listed and an actual target device. In an embodiment, the criteria handler 337 may store information about the order in which the plurality of candidate devices are listed and determine the actual target device mapping with a target device of a specific order selected by a response input of the user based on the information about a listing order. For example, when there are three TVs, such as a living room TV, a main room TV, and a child room TV, that are target candidate devices, the criteria handler 337 may include identification information of an actual TV mapping with each of a first TV, a second TV, and a third TV.

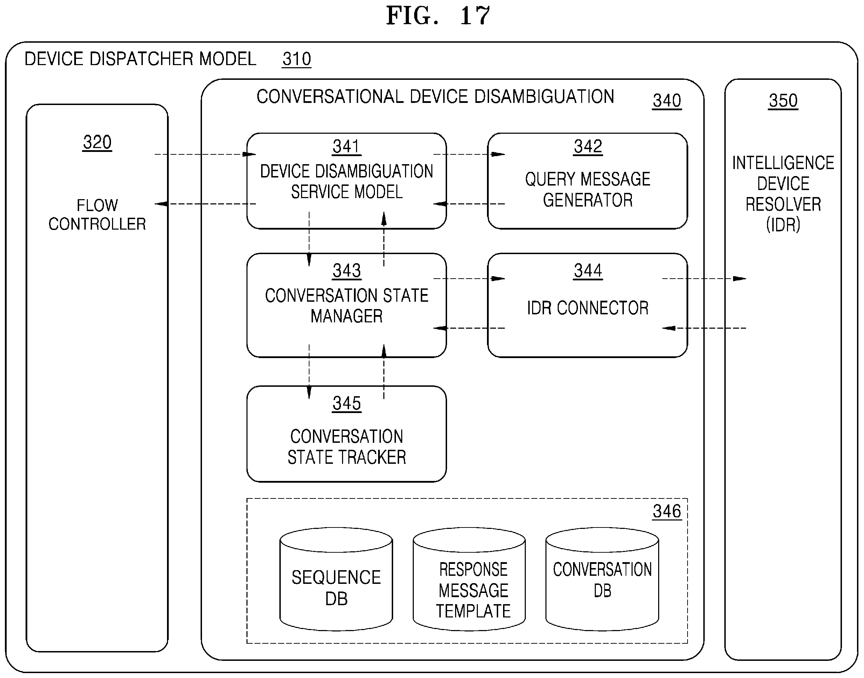

FIG. 17 illustrates the conversational device disambiguation 340 of the device dispatcher model 310 according to an embodiment.

Referring to FIG. 17, the device dispatcher model 310 may include the flow controller 320, the conversational device disambiguation 340, and the IDR 350.

The conversational device disambiguation 340 may include a device disambiguation service 341, a query message generator 342, a conversation state manager 343, an intelligence device resolver (IDR) connector 344, a conversation state tracker 345, and a DB 346.

The device disambiguation service 341 may recognize whether there is one target device candidate or a plurality of target device candidates from the flow controller 320 and transmit a signal for clarifying a target device when there is the plurality of target device candidates to the query message generator 342.

The query message generator 342 may generate a query message for selecting the target device from among the plurality of target device candidates. In an embodiment, the query message generator 342 may generate the query message by using an NLG model. In an embodiment, the query message generator 342 may convert the query message in the format of text into an audio signal by using a TTS model.

The conversation state manager 343 may control a state regarding a conversation between a user and a client device or a conversation between devices. For example, when the target device is recognized as a "TV" from a speech input of a user in an idle state, the conversation state manager 343 may be changed to a state in which disambiguation is performed as to which TV will perform an operation.

When there is a plurality of device candidates corresponding to the determined type based on the speech input of the user, the IDR connector 344 may determine how many device candidates correspond to a name or a type of the target device and which device is the optimal target device through query transmission and reception with the IDR 350.

In an embodiment, when (or based on) the conversation state manager 343 recognizes that there is a plurality of devices corresponding to the determined type from the speech input received from the user, the state may be changed to a disambiguation state. The device disambiguation service 341 may transmit a signal to the query message generator 342 based on a signal regarding the disambiguation state. The query message generator 342 may generate a query message that queries which device of the plurality of device candidates to select as the target device.

The conversation state tracker 345 may obtain information about a conversation situation between the user and the client device or between devices to track a conversation state. For example, the conversation state tracker 345 may obtain the information about the situation as to whether a current situation is a state in which a response input for disambiguating the target device is received or whether the conversation should be resumed in accordance with the response input being received. The DB 346 includes a sequence DB, a response message template, and a conversation DB.

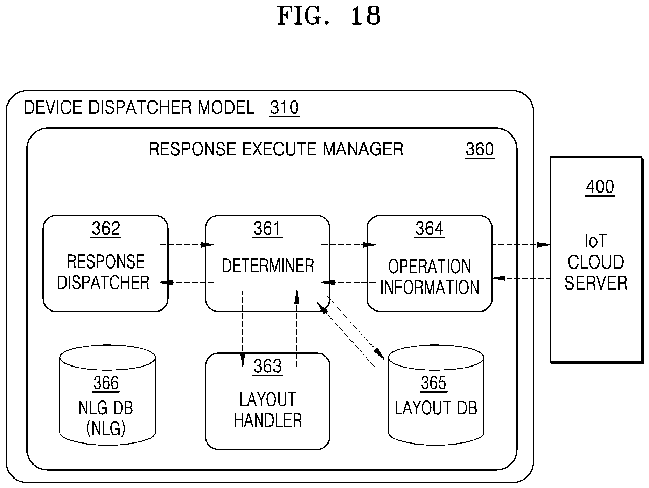

FIG. 18 is a diagram illustrating the response execute manager 360 of the device dispatcher model 310 according to an embodiment.

Referring to FIG. 18, the device dispatcher model 310 may include the response execute manager 360.

The response execute manager 360 may distribute signals to allow a client device corresponding to a listener that receives a speech input from a user and a target device which is an executor that executes an operation to perform operations. The response execute manager 360 may include a determiner 361, a response dispatcher 362, a layout handler 363, operation information 364, a layout DB 365, and an NLG DB 366.

The determiner 361 may determine a property of a feedback that provides the user with a result of performing an operation by the target device according to operation information obtained from a second assistant model. In an embodiment, the determiner 361 may determine whether the operation information requires only performing of the operation through the target device or includes the feedback such as output of a response message through NLG.

Here, the response message may be a message indicating a performing result that the operation is performed by the target device or the performing of the operation fails. For example, when the target device is a TV and the TV performs an operation of playing a movie, the response message may be "The TV has played the movie" indicating a performing result of a movie playing operation . In another example, when the target device is a speaker and the speaker fails to perform an operation of increasing the volume, the response message may be "the volume increase failed because the volume is at its highest state" indicating a result of performing a volume increase operation and the reason for failure. In this case, the performing result may be a "failure," and the reason for failure received with the performing result may be that "the current volume is in the highest state."

The response message may be configured in at least one format of text, audio, image, or moving image. The determiner 361 may determine the format of the response message when the operation information requires the feedback.

When receiving a signal including the operation information 364 and information about a layout from the response dispatcher 362, the determiner 361 may separate the signal such that a control command for performing the operation and a layout are output to the target device and the response message is output to the client device. For example, the determiner 361 may transmit operation information and GUI information for performing an operation to the loT cloud server 400 and may transmit a response message such as "The TV has played the movie" to the session manager. The response message may be generated using a message previously stored in the NLG DB 366. Here, the GUI information may be stored in the layout DB 365.

The response dispatcher 362 may determine a device to which the response message should be output. The response dispatcher 362 may determine the device to which the response message is to be output based on a predefined rule. The predefined rule may include information about a format of the corresponding response message for each operation. In addition, the predefined rule may additionally include information about a device to output the response message.

For example, the response message with respect to the movie playing operation is defined to output in audio format and to be provided by the client device 110 that transmits a speech input of a user. When the response message with respect to the movie playing operation is defined to output in the format of audio and to be provided by the client device, the server 300 may convert the response message into the format of audio and transmit the response message to the client device.

In an embodiment, the response dispatcher 362 may determine an output device of the generated response message as the client device that receives the speech input from the user. This is to prevent a problem that the user may be confused about which device to communicate with when a response message is output from another device other than a device with the user is interacting.

The layout handler 363 may determine the layout for (e.g., necessary for) the target device to actually perform the operation among previously-stored layouts. In an embodiment, the layout handler 363 may determine the layout to be transferred to the target device.

The layout DB 365 may store the layout used by the target device to perform an operation. The layout DB 365 may store, for example, data about a GUI related to music play, movie play, etc.

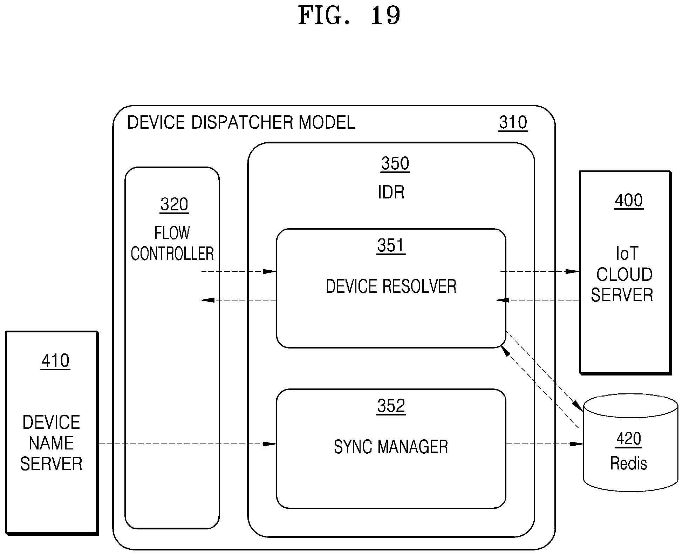

FIG. 19 is a diagram illustrating the IDR 350 of the device dispatcher model 310 according to an embodiment.

Referring to FIG. 19, the device dispatcher model 310 may include the flow controller 320 and the IDR 350. The loT cloud server 400 shown in FIG. 19 is the same as or similar to the loT cloud server 400 (see FIG. 15) shown in FIG. 15, and the device name server 410 is the same as or similar to the device name server 410 (see FIG. 15) shown in FIG. 15. In FIG. 19, the loT cloud server 400 and the device name server 410 are illustrated as separate servers, but are not limited thereto. For example, according to another embodiment, the loT cloud server 400 and the device name server 410 may be integrated into one server.

When there is a plurality of device candidates corresponding to a determined type in relation to text converted from a speech input of a user, the flow controller 320 may determine how many device candidates correspond to a name or a type of the target device and which device is the optimal target device through query transmission and reception with the IDR 350.

The IDR 350 may determine the optimal target device among the plurality of device candidates based on a first intent obtained by interpreting the text through a first NLU model and device information of a plurality of devices previously registered in the loT cloud server 400 in relation to account information of a user. The device information may include information about at least one of, for example, position information of the client device 110, function capability information of each of the plurality of devices previously registered in the loT cloud server 400, position information, whether each device is powered on/off, or information about an operation currently performed by each device.

The IDR 350 may include a device resolver 351 and a sync manager 352.

The device resolver 351 may obtain a list of the plurality of previously-registered devices in relation to the account information of the user from the loT cloud server 400. In an embodiment, the device resolver 351 may identify a plurality of devices installed or located in the periphery based on the position of the client device 110. In an embodiment, the device resolver 351 may determine the target device based on at least one of a type of each of the plurality of devices, a name, a common name, a position, an operation currently performed by each of the plurality of devices, or whether each of the plurality of devices is powered on/off. In an embodiment, the device resolver 351 may transmit a query requesting information about the function capability according to the name or the type of the device to the loT cloud server 400 and receive the function capability information of the device from the loT cloud server 400. The device resolver 351 may determine the target device based on the received information.

In an embodiment, the device resolver 351 may transmit at least one of the identification information ID, a name, a nickname, a position, a manufacturer, a model ID, function capability, and information about a current operation state of the target device to the conversational device disambiguation 340 (see FIG. 15).

The sync manager 352 may synchronize the device name with the device name server 410. In an embodiment, the sync manager 352 may synchronize a device nickname obtained from the text converted from the speech input of the user with a nickname of the device previously stored in the external device name server 410.

The device name server 410 may be an external server that stores a personalized vocabulary of at least one of synonyms, similar words, or slang words registered by the user in relation to the name of the device. The device name server 410 may register and store a device as a personalized word or vocabulary and add or delete the personalized word or vocabulary when the user registers the device. In an embodiment, the device name server 410 may be in the form of a cloud server, an external storage or a DB.

In an embodiment, the sync manager 352 may synchronize the personalized nickname of the device stored in device name server 410 with the device name stored in a Redis 420. In this case, the sync manager 352 may operate like a cache server.

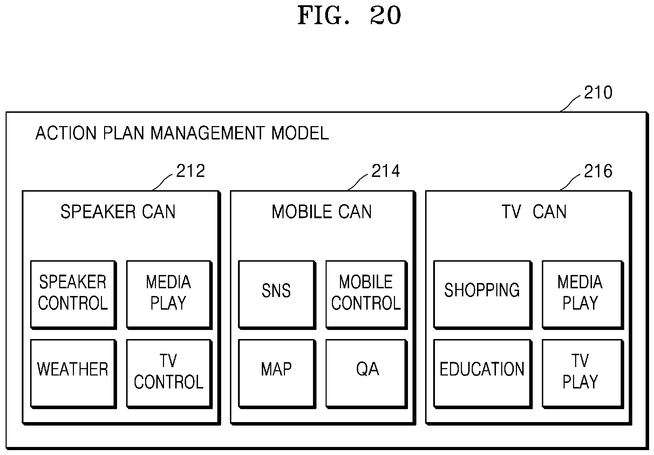

FIG. 20 is a conceptual diagram illustrating the action plan management model 210 according to an embodiment. The action plan management model 210 may be a component included in the server 300, but is not limited thereto. The action plan management model 210 may be a separate component from the server 300. In an embodiment, the action plan management model 210 may be included in the loT cloud server 400. The action plan management model 210 may configure the second assistant model 200b together with the plurality of second NLU models 300b. In an embodiment, the action plan management model 210 may be configured to include the plurality of second NLU models 300b.

The action plan management model 210 may be a model that manages operation information about a device in order to generate an action plan. The action plan management model 210 may be a server that stores operation information for (e.g., necessary for) a target device determined by the server 300 to perform operations. The action plan management model 210 may include at least one of an AI learning model, an AI learning algorithm, a routine, a set of instructions, and an NLU model. In an embodiment, the action plan management model 210 may include the NLU model.

The action plan management model 210 may manage the operation information related to a plurality of detailed operations for each device type and relationships between the plurality of detailed operations. The correlations between each detailed operation and other detailed operations among the plurality of detailed operations include information about another detailed operation that is to be or must be essentially performed before performing one detailed operation in order to perform the detailed operation.

The action plan management model 210 may determine the plurality of detailed operations to be performed by the device based on a second intent determined from the text and a parameter through a second NLU model. In an embodiment, the action plan management model 210 may determine an input parameter value to (e.g., required to) perform the plurality of determined detailed operations or a result value output by performing the detailed operations. Here, the input parameter value and the output result value may be defined as a concept of a designated form (or class). Accordingly, the action plan may include the plurality of detailed operations and a plurality of concepts determined in relation to the second intent and the parameter.

The action plan management model 210 may determine the relationship between a plurality of operations and the plurality of concepts step by step (or hierarchically). For example, the action plan management model 210 may perform planning to determine an order of performing the plurality of determined detailed operations based on the second intent and the parameter and generate planning result operation information. That is, the action plan management model 210 may plan the order of performing the plurality of detailed operations based on the input parameter value required to perform the plurality of detailed operations or the result value output by performing the detailed operations and accordingly generate operation information.

The operation information may be information related to detailed operations to be performed by the device, correlations between each detailed operation and another detailed operation, and an order of performing the detailed operations. The operation information may include, for example, functions to be performed by the target device to perform a specific operation, an order of performing the functions, an input value to (e.g., required to) perform the functions, and an output value output as a result of performing the functions, but is not limited thereto. The action information may include an action plan generated by the action plan management model 210.

The action plan management model 210 may perform planning using information stored in a capsule database in which a set of relationships between concepts and operations are stored. The action plan management model 210 may store operations and concepts corresponding to the operations as a concept action network (CAN) which is a capsule DB. The action plan management model 210 may be configured as the capsule DB that stores the CAN for each device.

Referring to FIG. 20, the action plan management model 210 may include a speaker CAN 212, a mobile CAN 214, and a TV CAN 216. The speaker CAN 212 may include an action plan storing information about detailed operations including speaker control, media play, weather, and TV control, and a concept corresponding to each of the detailed operations in a capsule form. The mobile CAN 214 may include an action plan storing information about detailed operations including SNS, mobile control, map, and QA, and a concept corresponding to each of the detailed operations in a capsule form. The TV CAN 216 may include an action plan storing information regarding detailed operations including shopping, media play, education, and TV play, and a concept corresponding to each of the detailed operations in a capsule form. In an embodiment, a plurality of capsules included in each of the speaker CAN 212, the mobile CAN 214, and the TV CAN 216 may be stored in a function registry which is a component in the action plan management model 210.

In an embodiment, the action plan management model 210 may include a strategy registry used to or required to determine detailed operations corresponding to a second intent and a parameter determined by interpreting text converted from a speech input by the server 300 through a second NLU model. The strategy registry may include criteria information for determining one action plan when there is a plurality of action plans related to the text. In an embodiment, the action plan management model 210 may include a follow up registry that stores information of a follow up operation for suggesting the follow up operation to the user in a given situation. The follow up operation may include, for example, a follow up speech.

In an embodiment, the action plan management model 210 may include a layout registry that stores layout information output by the target device.

In an embodiment, the action plan management model 210 may include a vocabulary registry in which vocabulary information included in capsule information is stored. In an embodiment, the action plan management model 210 may include a dialogue registry in which dialogue (or interaction) information with the user is stored.

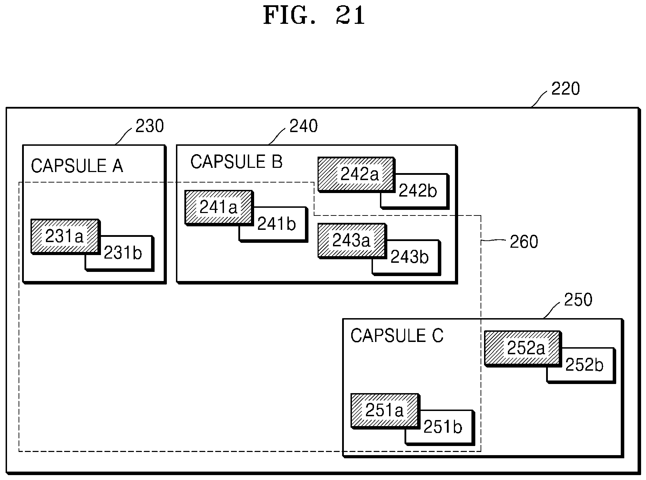

FIG. 21 is a diagram illustrating a capsule database 220 stored in the action plan management model 210 according to an embodiment.

Referring to FIG. 21, the capsule database 220 stores detailed operations and relationship information about a concept corresponding to the detailed operations. The capsule database 220 may be implemented in the form of a CAN. The capsule database 220 may store a plurality of capsules 230, 240, and 250. The capsule database 220 may store a detailed operation for performing operations related to a speech input of a user, and an input parameter value and an output result value necessary for the detailed operation in the form of the CAN.

The capsule database 220 may store information related to an operation for each device. In the embodiment shown in FIG. 21, the capsule database 220 may store the plurality of capsules 230, 240, and 250 related to operations performed by a specific device, such as a TV. In an embodiment, one capsule (e.g., the capsule A 230) may correspond to one application. One capsule may include at least one detailed operation and at least one concept for performing a designated function. For example, the capsule A 230 may include a detailed operation 231a and a concept 231b corresponding to the detailed operation 231a, and the capsule B 240 may include a plurality of detailed operations 241a, 242a, and 243a and a plurality of concepts 241b, 242b, and 243b respectively corresponding to the plurality of detailed operations 241a, 242a, and 243a.

The action plan management model 210 may generate an action plan for performing the operation related to the speech input of the user by using the capsule stored in the capsule database 220. For example, the action plan management model 210 may generate the action plan by using the capsule stored in the capsule database 220. For example, the action plan management model 210 may generate an action plan 260 using the detailed operation 231a and the concept 231b of the capsule A 230, the detailed operations 241a, 242a and 243a and the concepts 241b, 242b and 243b of the capsule B 240, and the detailed operation 251a and the concept 251b of the capsule C 250.

The action plan management model 210 may provide the generated action plan 260 to the server 300.

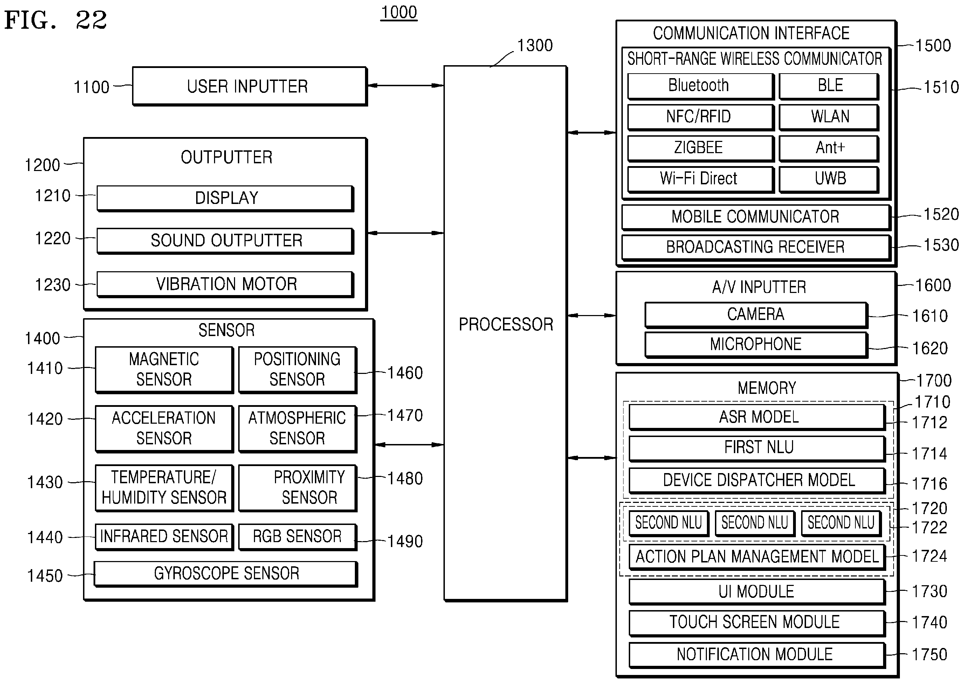

FIG. 22 is a block diagram illustrating components of a device 1000 according to an embodiment.

In FIGS. 2A, 2B, and 3-19, it is described that various operations are performed by the server 300, but the disclosure is not limited thereto. For example, according to one or more other embodiments, at least some of the operations may be performed by the device 1000 as well as or instead of the server 300. The client device 110 or the plurality of devices 120 shown in the disclosure may include components corresponding to components included in the device 1000 of FIG. 22. For example, the processor 1300 may be the same as or similar to the processor 114 (see FIG. 14) of the client device 110, a communication interface 1500 may be the same as or similar to the communication interface 118 (see FIG. 14) of the client device 110, a microphone 1620 may be the same as or similar to the microphone 112 (see FIG. 14) of the client device 110, and a memory 1700 may be the same as or similar to the memory 116 (see FIG. 14) of the client device 110.

Referring to FIG. 22, the device 1000 according to an embodiment may include a user inputter 1100, an outputter 1200, the processor 1300, a sensor 1400, the communication interface 1500, an A/V inputter 1600 and the memory 1700.

The user inputter 1100 refers to a device used by a user to input data for controlling the device 1000. For example, the user inputter 1100 may include a key pad, a dome switch, a touch pad (implementing, for example, at least one of a touch capacitance method, a pressure resistive method, an infrared detection method, a surface ultrasonic conductive method, a integral tension measuring method, a piezo effect method, etc.), a jog wheel, a jog switch, etc., but is not limited thereto.

The user inputter 1100 may request a response input regarding a query message and receive the response input from the user.

The outputter 1200 may output an audio signal, a video signal, or a vibration signal and may include a display 1210, a sound outputter 1220 (e.g., a speaker), and a vibration motor 1230.

The display 1210 displays and outputs information processed by the device 1000. For example, the display 1210 may receive notification content indicating a result of performing an operation from the server 300 and display the notification content. In an embodiment, the display 1210 may display text and/or a graphical user interface (GUI) (or GUI item or content) received from the server 300.

In an embodiment, the display 1210 may display content related to an image, such as movie play or TV broadcast play, based on a control command received from the loT cloud server 400.

The sound outputter 1220 outputs audio data received from the communication interface 1500 or stored in the memory 1700. Also, the sound outputter 1220 outputs a sound signal related to a function performed by the device 1000. When the notification content received from the server 300 is a speech signal, the sound outputter 1220 may output the notification content.

The processor 1300 (e.g., at least one processor) typically controls the overall operation of the device 1000. For example, the processor 1300 may generally control the user inputter 1100, the outputter 1200, the sensor 1400, the communication interface 1500, and the A/V inputter 1600 and the memory 1700 by executing programs stored in the memory 1700 and processing data stored in the memory 1700. In addition, the processor 1300 may perform functions of the device 1000 shown in FIGS. 2A, 2B, 3 to 17 by executing programs stored in the memory 1700 and processing data stored in the memory 1700.

The processor 1300 may include at least one of, for example, a central processing unit, a microprocessor, a graphics processing unit, application specific integrated circuits (ASICs), digital signal processors (DSPs), Digital Signal Processing Devices (DSPDs), Programmable Logic Devices (PLDs), and Field Programmable Gate Arrays (FPGAs), but is not limited thereto.

Specifically, the processor 1300 may control the communication interface 1500 to receive the speech input of the user from the server 300 or another device connected through a network. The processor 1300 may perform ASR using data relating to the ASR model 1712 stored in the memory 1700, thereby converting the received speech input into text, determining a first intent related to the text using data about a first NLU model 1714 stored in the memory 1700, and determining a type of a target device related to the first intent using data about a device dispatcher model 1716.

In an embodiment, the processor 1300 may obtain operation information for the target device to perform operations related to the intention of the user included in the text through a second NLU model corresponding to a determined target device type among a plurality of second NLU models 1722 stored in the memory 1700 and an action plan management model 1724 stored in the memory 1700.

In an embodiment, the processor 1300 may control the communication interface 1500 to receive device information of a plurality of devices previously registered in the loT cloud server 400 in relation to account information of the user. The device information of the plurality of registered devices may be stored in the memory 1700. In this case, the processor 1300 may obtain the device information from the memory 1700. The processor 1300 may determine the target device based on device information of another device.

In an embodiment, the processor 1300 may obtain a name of the device from the text using the first NLU model 1714 stored in the memory 1700 and determine the type of the target device based on the name of the device and the device information received from the loT cloud server 400 by using the data about the device dispatcher model 1716 stored in the memory 1700.

In an embodiment, the processor 1300 may extract from the text a common name related to the device type and a word or phrase regarding the installation position of the device by using the first NLU model 1714, and determine the type of the target device based on the extracted common name and the installation position of the device.

In an embodiment, when extracting a personalized nickname from the text, the processor 1300 may control the communication interface 1500 to transmit the personalized nickname to an external server that stores at least one of synonyms, similar words, and slang words of a plurality of devices previously registered by the user and receive device identification information corresponding to the personalized nickname from the external server. The personalized nickname and the device identification information corresponding thereto may be stored in the memory 1700. In this case, the processor 1300 may obtain the device identification information from the memory 1700. The processor 1300 may determine the target device based on the received or obtained device identification information.

In an embodiment, the processor 1300 may control the communication interface 1500 to receive information including at least one of a name of each of the plurality of previously-registered devices in relation to the account information of the user, a type, an installation position or location, power on/off, or an operation currently performed by each device from the external loT cloud server 400.

In an embodiment, when there is a plurality of devices corresponding to the type of the determined target device, the processor 1300 may generate a query message for selecting the target device from among a plurality of candidate devices by using an NLG model. The processor 1300 may control the client device to output the generated query message.

In addition, the processor 1300 may perform all operations performed by the server 300.

The sensor 1400 may detect a state of the device 1000 or a state around the device 1000 and transmit detected information to the processor 1300. The sensor 1400 may be used to generate position information of the user or the device 1000.

The sensor 1400 may include at least one of a magnetic sensor 1410, an acceleration sensor 1420, a temperature/humidity sensor 1430, an infrared sensor 1440, a gyroscope sensor 1450, a positioning sensor (for example, a global positioning sensor (GPS)) 1460, an atmospheric sensor 1470, a proximity sensor 1480, and an RGB sensor (a luminance sensor) 1490, but is not limited thereto. A function of each sensor may be intuitively inferred by one of ordinary skill in the art based on its name, and thus, its detailed description is omitted.

For example, the device 1000 may obtain the position information of the device 1000 through the positioning sensor 1460. For example, the position information may indicate a position or position coordinates where the device 1000 is currently located.

The communication interface 1500 may include one or more components in which the device 1000 communicates with another device, the server 300, and the loT cloud server 400. The communication interface 1500 may perform data communication with another device, the server 300, and the loT cloud server 400 by using at least one of data communication methods, such as wired LAN, wireless LAN, Wi-Fi, Bluetooth, Zigbee, Wi-Fi direct (WFD), infrared data association (IrDA), Bluetooth low energy (BLE), near field communication (NFC), wireless broadband internet (Wibro), world interoperability for microwave access (WiMAX), shared wireless access protocol (SWAP), wireless gigabit alliance (WiGiG), and RF communication.

For example, the communication interface 1500 may include a short-range wireless communicator 1510, a mobile communicator 1520, and a broadcasting receiver 1530.

The short-range wireless communicator 1510 may include a Bluetooth communicator, a Bluetooth low energy (BLE) communicator, a near field communicator (NFC), a WLAN (or Wi-fi) communicator, a Zigbee communicator, an infrared data association (IrDA) communicator, a Wi-fi direct (WFD) communicator, a ultrawide band (UWB) communicator, an Ant+ communicator, etc., but is not limited thereto.

In an embodiment, the device 1000 may obtain position information of the device 1000 through the short-range wireless communicator 1510. For example, the device 1000 may determine a place where the device 1000 is located through an NFC tag. Also, for example, the device 1000 may determine a place where the device 1000 is located through an identifier of Wi-Fi. For example, the device 1000 may determine the place where the device 1000 is located by confirming an SSID of the Wi-Fi to which the device 1000 is connected.

The mobile communicator 1520 may transceive wireless signals with at least one of a base station, an external terminal, or a server, on a mobile communication network. Here, the wireless signal may include a speech call signal, a video telephone call signal, or various types of data according to transceiving of text/multimedia messages.

The broadcasting receiver 1530 may receive a broadcasting signal and/or broadcasting-related information from the outside through broadcasting channels. The broadcasting channels may include satellite channels and ground wave channels. According to an embodiment, the device 1000 may not include the broadcasting receiver 1530.

The A/V inputter 1600 may be configured to input an audio signal or a video signal and may include a camera 1610 and a microphone 1620. The camera 1610 may obtain an image frame, such as a still image or a moving image, through an image sensor, in a video telephone mode or a capturing mode. The image captured by the image sensor may be processed by the processor 1300 or an additional image processor.

The microphone 1620 may receive an external sound signal and process the received external sound signal into electrical voice data. For example, the microphone 1620 may receive a speech signal from the user. The microphone 1620 may receive a speech input of the user. The microphone 1620 may use various noise removal algorithms for removing noise generated in a process of receiving external sound signals.

The memory 1700 may store programs for a processing and controlling operation of the processor 1300 and may store data input to the device 1000 or output from the device 1000.

The memory 1700 may include at least one type of storage medium, from among a flash memory type storage medium, a hard disk type storage medium, a multi-media card micro type storage medium, a card type memory (for example, an SD or an XD memory), random-access memory (RAM), static RAM (SRAM), read-only memory (ROM), electrically erasable programmable ROM (EEPROM), programmable ROM (PROM), a magnetic memory, a magnetic disk, or an optical disk.

In an embodiment, the memory 1700 may include a first assistant model 1710 and a second assistant model 1720, a UI module 1730, a touchscreen module 1740, and a notification module 1750. The first assistant model 1710 may store data about the ASR model 1712, the first NLU model 1714, and the device dispatcher model 1716. The second assistant model 1720 may store data about the plurality of second NLU models 1722 and the action plan management model 1724. In an embodiment, the memory 1700 may store device information and device name information.

The UI module 1730 may provide a specialized UI or graphics user interface (GUI), etc., synchronized to the device 1000 according to applications.

The touch screen module 1740 may sense a touch gesture of the user on a touch screen and may transmit information about the touch gesture to the processor 1300. The touch screen module 1740 according to some embodiments may recognize and analyze a touch code. The touch screen module 1740 may be formed as additional hardware including a controller.

The notification module 1750 may generate a signal for notifying the occurrence of events of the device 1000. Example of events occurring in the device 1000 may include call signal reception, message reception, key signal input, schedule notification, etc. The notification module 1750 may output a notification signal in a video signal form through the display 1210, in an audio signal form through the sound outputter 1220, and in a vibration signal form through the vibration motor 1230.

The program executed by the server 300 described herein may be realized as hardware components, software components, and/or the combination of hardware components and software components. The program may be executed by all systems capable of executing computer-readable instructions.

The software components may include a computer program, a code, an instruction, or a combination of one or more thereof, and may configure a processing device to operate as required or separately or collectively command the processing device.

The software components may be realized as a computer program including instructions stored in computer-readable storage media. The computer-readable storage media may include, for example, magnetic storage media (for example, ROM, RAM, floppy disks, hard disks, etc.) and optical reading media (for example, CD-ROM, DVD, etc.). The computer-readable recording media may be distributed in computer systems connected in a network and may store and execute computer-readable codes in a distributed fashion. The media may be computer-readable, may be stored in a memory, and executed by a processor.

The computer-readable storage media may be provided as non-transitory storage media. Here, the term "non-transitory" only denotes that the storage media do not include signals and are tangible, and the term does not distinguish between semi-permanent storage and temporary storage of data in the storage media.

Also, the program according to the embodiments may be included in a computer program product. The computer program product is a product purchasable between a seller and a purchaser.

The computer program product may include a software program and a computer-readable storage medium in which the software program is stored. For example, the computer program product may include a software program-type product (for example, a downloadable application) electronically distributed by a manufacturer of the device or electronic markets (for example, GOOGLE PLAY ^{™} store, App Store, etc.). For electronic distribution, at least a portion of the software program may be stored in storage media or temporarily generated. In this case, the storage media may be a server of the manufacturer, a server of the electronic market, or a storage medium of a broadcasting server temporarily storing the software program.

The computer program product may include a storage medium of a server or a storage medium of a terminal in a system including the server and the terminal (for example, an ultrasonic diagnosis apparatus). Alternatively, when there is a third device (for example, a smartphone) connected with the server or the terminal for communication, the computer program product may include a storage medium of the third device. Alternatively, the computer program product may include a software program transmitted to the terminal or the third device from the server or to the terminal from the third device.

In this case, one of the server, the terminal, and the third device may execute the method according to the embodiments by executing the computer program product. Alternatively, at least two of the server, the terminal, and the third device may execute the method according to the embodiments in a distributed fashion by executing the computer program product.

For example, the server (for example, an loT cloud server or an AI server) may execute the computer program product stored in the server and control the terminal connected with the server for communication to perform the method according to the embodiments.

As another example, the third device may execute the computer program product and control the terminal connected to the third device for communication to perform the method according to the embodiments.

When the third device executes the computer program product, the third device may download a computer program product from the server and execute the downloaded computer program product. Alternatively, the third device may execute the computer program product provided in a free-loaded state and perform the method according to the embodiments.

## Claims

1. A method, performed by a server (300), of controlling a device (121, 122, 123) among a plurality of devices (120) in a network environment, based on a speech input, the method comprising:
receiving (S510) a speech input of a user;
performing (S520) an automatic speech recognition, ASR, to convert the received speech input into text by using an ASR model;
analyzing (S530) the text by using a first natural language understanding, NLU, model (300a);
determining (S530) a type of at least one target device based on a result of the analyzing the text;
selecting, (S540) according to the determined type of the at least one target device a second NLU model (300b) corresponding to the determined at least one target device type, from among a plurality of second NLU models (300b) respectively corresponding to different types of target device and trained to analyze text related to different types of target device;
analyzing (S540) at least a part of the text by using the selected second NLU model (300b) and obtaining operation information of an operation to be performed by the target device based on a result of the analyzing the at least the part of the text; and outputting (S550) the obtained operation information to control the target device based on the obtained operation information.

2. The method of claim 1, wherein:
the first NLU model (300a) is a model configured to analyze the text to determine at least one target device of a plurality of target devices, and
wherein the plurality of second NLU models (300b) are models configured to analyze the at least the part of the text to obtain the operation information regarding the operation to be performed by the determined at least one target device.

3. The method of claim 1, further comprising:
obtaining device information of the plurality of devices from an Internet of Things, IoT, cloud server,
wherein the determining of the target device comprises determining at least one device among the plurality of devices as the target device based on the obtained device information and the result of the analyzing the text by using the first NLU model (300a).

4. The method of claim 3, wherein:
the determining of the at least one device as the target device comprises:
determining the type of the target device based on the analyzing the text by using the first NLU model, and
determining the target device based on the determined type of the target device and the obtained device information; and
wherein the outputting the obtained operation information comprises transmitting the obtained operation information to the IoT cloud server for controlling the target device based on the operation information.

5. The method of claim 2, wherein:
the first NLU model (300a) is a model configured to be updated through training to determine the type of a new target device based on the new target device being added; and
the plurality of second NLU models (300b) is configured such that a new second NLU model (300b) corresponding to the type of the added new target device is added to the plurality of second NLU models(300b), in order to obtain operation information regarding an operation to be performed by the added new target device.

6. The method of claim 3, further comprising:
determining whether there is a plurality of target device candidates based on the obtained device information of the plurality of devices; and
generating, by using a natural language generator, NLG, model, a query message for determining the target device from among the determined plurality of target device candidates; and
wherein the determining of the target device comprises: determining the target device based on a response input of the user regarding the generated query message.

7. The method of claim 1, wherein:
the determining of the target device further comprises, based on the result of the analyzing the text by the first NLU model (300a), determining the target device by using a device dispatcher model; and
the obtaining of the operation information comprises, based on the result of the analyzing the at least the part of the text by the second NLU model (300b), obtaining, by using an action plan management model, the operation information regarding the operation to be performed by the determined target device .

8. A server (300) for controlling a device (121, 122, 123), among a plurality of devices (120) in a network environment, based on a speech input, the server (300) comprising:
a communication interface (302) configured to perform data communication;
a memory (306) storing a program comprising one or more instructions; and
a processor (304) configured to execute the one or more instructions of the program stored in the memory (306), to:
receive (S510) a speech input of a user from at least one of the plurality of devices through the communication interface;
perform (S520) an automatic speech recognition, ASR, to convert the received speech input into text by using an ASR model;
analyze (S530) the text by using a first natural language understanding, NLU, model (300a);
determine (S530) a type of at least one target device based on a result of analyzing the text;
select (S540), according to the determined type of target device a second NLU model (300b) corresponding to the determined type of the at least one target device, from among a plurality of second NLU models (300b) respectively corresponding to types of different target device and trained to analyze text related to different types of target device;
analyze (S540) at least a part of the text by using the selected second NLU model (300b) and obtain operation information of an operation to be performed by the target device based on a result of analyzing the at least the part of the text; and
control (S550) the communication interface to output the obtained operation information in order to control the target device based on the obtained operation information.

9. The server (300) of claim 8, wherein:
the first NLU model (300a) is a model configured to analyze the text to determine at least one target device of a plurality of target devices; and
the plurality of second NLU models (300b) are models configured to analyze the at least the part of the text to obtain operation information regarding the operation to be performed by the determined at least one target device.

10. The server (300) of claim 8, wherein the processor (304) is further configured to execute the one or more instructions to:
control the communication interface to receive device information of the plurality of devices from an IoT cloud server; and
determine at least one device among the plurality of devices as the target device based on the received device information and the result of analyzing the text through the first NLU model (300a).

11. The server (300) of claim 10, wherein the processor (304) is further configured to execute the one or more instructions to:
determine the type of the target device based on analyzing the text using the first NLU model (300a); and
determine the target device based on the determined type of the target device and the received device information

12. The server (300) of claim 9, wherein:
the first NLU model (300a) is a model configured to be updated through training to determine a type of a new target device based on the new target device being added; and
the plurality of second NLU models (300b) is configured such that a new second NLU model (300b) corresponding to the type of the added new target device is added to the plurality of second NLU models (300b), in order to obtain operation information of an operation to be performed by the added new target device.

13. The server (300) of claim 10, wherein the processor (304) is further configured to execute the one or more instructions to, determine whether there is a plurality of target device candidates based on the obtained device information of the plurality of devices:
generate, by using a natural language generator, NLG, model, a query message for determining the target device from among the determined plurality of target device candidates; and
determine the target device based on a response input of the user regarding the generated query message.

14. The server (300) of claim 8, wherein the processor (304) is further configured to execute the one or more instructions to:
based on the result of analyzing the text by the first NLU model (300a), determine the target device by using a device dispatcher model; and
based on the result of analyzing the at least the part of text by the second NLU model (300b), obtain, by using an action plan management model, the operation information regarding the operation to be performed by the determined target device.

15. A non-transitory computer-readable recording medium having recorded thereon a program for executing the method of claim 1 on a computer.

## Patentansprüche

1. Ein von einem Server (300) durchgeführtes Verfahren zur Steuerung eines Geräts (121, 122, 123) aus einer Vielzahl von Geräten (120) in einer Netzwerkumgebung auf der Grundlage einer Spracheingabe, wobei das Verfahren umfasst:
Empfang (S510) einer Spracheingabe eines Benutzers;
Durchführung (S520) einer automatischen Spracherkennung, ASR, zur Umwandlung der empfangenen Spracheingabe in Text unter Verwendung eines ASR-Modells;
Analysieren (S530) des Textes unter Verwendung eines ersten Modells für natürliches Sprachverständnis (NLU) (300a);
Bestimmen (S530) eines Typs von mindestens einem Zielgerät auf der Grundlage eines Ergebnisses der Textanalyse;
Auswählen (S540) eines zweiten NLU-Modells (300b), das dem ermittelten mindestens einen Zielgerätetyp entspricht, gemäß dem ermittelten Typ des mindestens einen Zielgeräts aus einer Vielzahl von zweiten NLU-Modellen (300b), die jeweils verschiedenen Typen von Zielgeräten entsprechen und darauf trainiert sind, Text zu analysieren, der sich auf verschiedene Typen von Zielgeräten bezieht;
Analysieren (S540) mindestens eines Teils des Textes unter Verwendung des ausgewählten zweiten NLU-Modells (300b) und Erhalten von Betriebsinformationen eines Betriebs, der durch den Typ des mindestens einen Zielgeräts ausgeführt werden soll, basierend auf einem Ergebnis der Analyse des mindestens einen Teils des Textes; und
Ausgeben (S550) der erhaltenen Betriebsinformationen, um das Zielgerät basierend auf den erhaltenen Betriebsinformationen zu steuern.

2. Das Verfahren nach Anspruch 1, wobei:
das erste NLU-Modell (300a) ein Modell ist, das so konfiguriert ist, dass es den Text analysiert, um mindestens ein Zielgerät aus einer Vielzahl von Zielgeräten zu bestimmen, und
wobei die mehreren zweiten NLU-Modelle (300b) Modelle sind, die so konfiguriert sind, dass sie den mindestens einen Teil des Textes analysieren, um die Betriebsinformationen bezüglich des Betriebs zu erhalten, der von dem bestimmten mindestens einen Zielgerät ausgeführt werden soll.

3. Das Verfahren nach Anspruch 1, das ferner umfasst:
Erhalten von Geräteinformationen der Vielzahl von Geräten von einem Internet der Dinge, IoT, Cloud-Server,
wobei das Bestimmen des Zielgeräts das Bestimmen mindestens eines Geräts aus der Vielzahl der Geräte als das Zielgerät auf der Grundlage der erhaltenen Geräteinformationen und des Ergebnisses der Analyse des Textes unter Verwendung des ersten NLU-Modells (300a) umfasst.

4. Das Verfahren nach Anspruch 3, wobei:
die Bestimmung des mindestens einen Geräts als das Zielgerät umfasst:
Bestimmen des Typs des Zielgeräts basierend auf der Analyse des Textes unter Verwendung des ersten NLU-Modells, und
Bestimmen des Zielgeräts auf der Grundlage des bestimmten Typs des Zielgeräts und der erhaltenen Geräteinformationen; und
wobei das Ausgeben der erhaltenen Betriebsinformationen das Übertragen der erhaltenen Betriebsinformationen an den IoT-Cloud-Server zum Steuern des Zielgeräts auf der Grundlage der Betriebsinformationen umfasst.

5. Das Verfahren nach Anspruch 2, wobei:
das erste NLU-Modell (300a) ein Modell ist, das so konfiguriert ist, dass es durch Training aktualisiert wird, um den Typ eines neuen Zielgeräts basierend auf dem neu hinzugefügten Zielgerät zu bestimmen; und
die Vielzahl von zweiten NLU-Modellen (300b) so konfiguriert ist, dass ein neues zweites NLU-Modell (300b), das dem Typ des hinzugefügten neuen Zielgeräts entspricht, zu der Vielzahl von zweiten NLU-Modellen (300b) hinzugefügt wird, um Betriebsinformationen bezüglich eines Betriebs zu erhalten, der von dem hinzugefügten neuen Zielgerät auszuführen ist.

6. Das Verfahren nach Anspruch 3, das ferner umfasst:
Bestimmen, ob es eine Vielzahl von Zielgerätekandidaten gibt, basierend auf den erhaltenen Geräteinformationen der Vielzahl von Geräten; und
Erzeugen einer Abfragenachricht zum Bestimmen des Zielgeräts aus der bestimmten Vielzahl von Zielgerätkandidaten unter Verwendung eines Modells eines natürlichen Sprachgenerators, NLG, und
wobei das Bestimmen des Zielgeräts umfasst: Bestimmen des Zielgeräts auf der Grundlage einer Antworteingabe des Benutzers bezüglich der erzeugten Abfragenachricht.

7. Das Verfahren nach Anspruch 1, wobei:
das Bestimmen des Zielgeräts ferner, basierend auf dem Ergebnis der Analyse des Textes durch das erste NLU-Modell (300a), das Bestimmen des Zielgeräts unter Verwendung eines Gerätedispatcher-Modells umfasst; und
das Erhalten der Betriebsinformationen umfasst, basierend auf dem Ergebnis der Analyse des mindestens einen Teils des Textes durch das zweite NLU-Modell (300b), das Erhalten der Betriebsinformationen bezüglich des Betriebs, der von der bestimmten Zielvorrichtung durchgeführt werden soll, durch Verwendung eines Aktionsplan-Managementm odells.

8. Ein Server (300) zum Steuern einer Vorrichtung (121, 122, 123) unter einer Vielzahl von Vorrichtungen (120) in einer Netzwerkumgebung, basierend auf einer Spracheingabe, wobei der Server (300) umfasst:
eine Kommunikationsschnittstelle (302), die für die Durchführung der Datenkommunikation konfiguriert ist;
einem Speicher (306), der ein Programm mit einem oder mehreren Befehlen speichert; und
einen Prozessor (304), der so konfiguriert ist, dass er die eine oder mehreren Anweisungen des im Speicher (306) gespeicherten Programms ausführt, um:
Empfangen (S510) einer Spracheingabe eines Benutzers von mindestens einem der mehreren Geräte über die Kommunikationsschnittstelle;
eine automatische Spracherkennung (ASR) durchführen (S520), um die empfangene Spracheingabe unter Verwendung eines ASR-Modells in Text umzuwandeln;
Analysieren (S530) des Textes unter Verwendung eines ersten Modells für natürliches Sprachverständnis (NLU) (300a);
Bestimmen (S530) eines Typs von mindestens einem Zielgerät auf der Grundlage eines Ergebnisses der Textanalyse;
Auswählen (S540) eines zweiten NLU-Modells (300b), das dem ermittelten Typ des mindestens einen Zielgeräts entspricht, aus einer Vielzahl von zweiten NLU-Modellen (300b), die jeweils Typen verschiedener Zielgeräte entsprechen und darauf trainiert sind, Text zu analysieren, der sich auf verschiedene Typen von Zielgeräten bezieht, in Übereinstimmung mit dem ermittelten Typ des Zielgeräts;
Analysieren (S540) mindestens eines Teils des Textes unter Verwendung des ausgewählten zweiten NLU-Modells (300b) und Erhalten von Betriebsinformationen eines von der Zielvorrichtung auszuführenden Betriebs auf der Grundlage eines Ergebnisses des Analysierens des mindestens einen Teils des Textes; und
Steuerung (S550) der Kommunikationsschnittstelle zur Ausgabe der erhaltenen Betriebsinformationen, um das Zielgerät auf der Grundlage der erhaltenen Betriebsinformationen zu steuern.

9. Der Server (300) nach Anspruch 8, wobei:
das erste NLU-Modell (300a) ein Modell ist, das so konfiguriert ist, dass es den Text analysiert, um mindestens ein Zielgerät aus einer Vielzahl von Zielgeräten zu bestimmen; und
die mehreren zweiten NLU-Modelle (300b) Modelle sind, die so konfiguriert sind, dass sie zumindest den Teil des Textes analysieren, um Betriebsinformationen in Bezug auf den Betrieb zu erhalten, der von dem bestimmten mindestens einen Zielgerät durchzuführen ist.

10. Der Server (300) nach Anspruch 8, wobei der Prozessor (304) ferner so konfiguriert ist, dass er die eine oder mehreren Anweisungen ausführt, um:
die Kommunikationsschnittstelle so zu steuern, dass sie Geräteinformationen der Vielzahl von Geräten von einem IoT-Cloud-Server empfängt; und
Bestimmen von mindestens einem Gerät aus der Vielzahl der Geräte als Zielgerät auf der Grundlage der empfangenen Geräteinformationen und des Ergebnisses der Analyse des Textes durch das erste NLU-Modell (300a).

11. Der Server (300) nach Anspruch 10, wobei der Prozessor (304) ferner so konfiguriert ist, dass er die eine oder mehreren Anweisungen ausführt, um:
Bestimmen des Typs des Zielgeräts basierend auf der Analyse des Textes unter Verwendung des ersten NLU-Modells (300a); und
Bestimmen des Zielgeräts auf der Grundlage des bestimmten Typs des Zielgeräts und der empfangenen Geräteinformationen.

12. Der Server (300) nach Anspruch 9, wobei:
das erste NLU-Modell (300a) ein Modell ist, das so konfiguriert ist, dass es durch Training aktualisiert wird, um einen Typ eines neuen Zielgeräts basierend auf dem neu hinzugefügten Zielgerät zu bestimmen; und
die Vielzahl von zweiten NLU-Modellen (300b) so konfiguriert ist, dass ein neues zweites NLU-Modell (300b), das dem Typ des hinzugefügten neuen Zielgeräts entspricht, zu der Vielzahl von zweiten NLU-Modellen (300b) hinzugefügt wird, um Betriebsinformationen eines Betriebs zu erhalten, der von dem hinzugefügten neuen Zielgerät durchzuführen ist.

13. Server (300) nach Anspruch 10, wobei der Prozessor (304) ferner so konfiguriert ist, dass er den einen oder die mehreren Befehle ausführt, um auf der Grundlage der erhaltenen Geräteinformationen der mehreren Geräte zu bestimmen, ob es eine Mehrzahl von Zielgerätekandidaten gibt:
unter Verwendung eines NLG-Modells (Natural Language Generator) eine Abfragenachricht zur Bestimmung des Zielgeräts aus der ermittelten Mehrzahl von Zielgerätekandidaten zu erzeugen; und
Bestimmen des Zielgeräts auf der Grundlage einer Antworteingabe des Benutzers bezüglich der erzeugten Abfragenachricht.

14. Der Server (300) nach Anspruch 8, wobei der Prozessor (304) ferner so konfiguriert ist, dass er die eine oder mehreren Anweisungen ausführt, um:
auf der Grundlage des Ergebnisses der Analyse des Textes durch das erste NLU-Modell (300a) das Zielgerät unter Verwendung eines Gerätedispatcher-Modells zu bestimmen; und
auf der Grundlage des Ergebnisses der Analyse des mindestens einen Teils des Textes durch das zweite NLU-Modell (300b) unter Verwendung eines Aktionsplan-Verwaltungsmodells die Betriebsinformationen bezüglich des vom bestimmten Zielgerät auszuführenden Betriebs zu erhalten.

15. Ein nicht-transitorisches, computerlesbares Aufzeichnungsmedium, auf dem ein Programm zur Ausführung des Verfahrens nach Anspruch 1 auf einem Computer aufgezeichnet ist.

## Revendications

1. Procédé, exécuté par un serveur (300), pour commander un dispositif (121, 122, 123) parmi une pluralité de dispositifs (120) dans un environnement de réseau, sur la base d'une entrée vocale, le procédé comprenant les étapes suivantes
recevoir (S510) une entrée vocale d'un utilisateur ;
exécuter (S520) une reconnaissance automatique de la parole, ASR, pour convertir l'entrée vocale reçue en texte en utilisant un modèle ASR ;
analyser (S530) le texte en utilisant un premier modèle de compréhension du langage naturel, NLU, (300a) ;
déterminer (S530) un type d'au moins un dispositif cible sur la base d'un résultat de l'analyse du texte ;
sélectionner (S540), selon le type déterminé de l'au moins un dispositif cible, un deuxième modèle NLU (300b) correspondant à l'au moins un type de dispositif cible déterminé, parmi une pluralité de deuxièmes modèles NLU (300b) correspondant respectivement à différents types de dispositif cible et formés pour analyser du texte lié à différents types de dispositif cible ;
analyser (S540) au moins une partie du texte en utilisant le second modèle NLU sélectionné (300b) et obtenir des informations d'opération d'une opération à effectuer par le type du au moins un dispositif cible sur la base d'un résultat de l'analyse de la au moins la partie du texte ; et
délivrer (S550) les informations de fonctionnement obtenues pour commander le dispositif cible sur la base des informations de fonctionnement obtenues.

2. Méthode de la revendication 1, dans laquelle :
le premier modèle NLU (300a) est un modèle configuré pour analyser le texte afin de déterminer au moins un dispositif cible parmi une pluralité de dispositifs cibles, et
dans lequel la pluralité de seconds modèles NLU (300b) sont des modèles configurés pour analyser la au moins la partie du texte pour obtenir les informations d'opération concernant l'opération à effectuer par le au moins un dispositif cible déterminé.

3. Procédé de la revendication 1, comprenant en outre :
obtenir des informations sur les dispositifs de la pluralité de dispositifs à partir d'un serveur cloud de l'Internet des objets, IoT,
dans lequel la détermination du dispositif cible comprend la détermination d'au moins un dispositif parmi la pluralité de dispositifs en tant que dispositif cible sur la base des informations de dispositif obtenues et du résultat de l'analyse du texte en utilisant le premier modèle NLU (300a).

4. Méthode de la revendication 3, dans laquelle :
la détermination de l'au moins un dispositif comme étant le dispositif cible comprend :
déterminer le type du dispositif cible sur la base de l'analyse du texte en utilisant le premier modèle NLU, et
déterminer le dispositif cible sur la base du type déterminé du dispositif cible et des informations obtenues sur le dispositif ; et
dans lequel la sortie des informations de fonctionnement obtenues comprend la transmission des informations de fonctionnement obtenues au serveur cloud IoT pour commander le dispositif cible sur la base des informations de fonctionnement.

5. Méthode de la revendication 2, dans laquelle :
le premier modèle NLU (300a) est un modèle configuré pour être mis à jour par apprentissage afin de déterminer le type d'un nouveau dispositif cible en fonction de l'ajout du nouveau dispositif cible ; et
la pluralité de seconds modèles NLU (300b) est configurée de telle sorte qu'un nouveau second modèle NLU (300b) correspondant au type du nouveau dispositif cible ajouté est ajouté à la pluralité de seconds modèles NLU (300b), afin d'obtenir des informations d'opération concernant une opération à effectuer par le nouveau dispositif cible ajouté.

6. Méthode de la revendication 3, comprenant en outre :
déterminer s'il existe une pluralité de candidats de dispositifs cibles sur la base des informations obtenues sur les dispositifs de la pluralité de dispositifs ; et
générer, en utilisant un modèle de générateur de langage naturel, NLG, un message de requête pour déterminer le dispositif cible parmi la pluralité déterminée de candidats de dispositifs cibles ; et
dans lequel la détermination du dispositif cible comprend : la détermination du dispositif cible sur la base d'une entrée de réponse de l'utilisateur concernant le message d'interrogation généré.

7. Procédé de la revendication 1, dans lequel :
la détermination du dispositif cible comprend en outre, sur la base du résultat de l'analyse du texte par le premier modèle NLU (300a), la détermination du dispositif cible en utilisant un modèle de répartiteur de dispositif ; et
l'obtention des informations d'opération comprend, sur la base du résultat de l'analyse de la au moins la partie du texte par le deuxième modèle NLU (300b), l'obtention, en utilisant un modèle de gestion de plan d'action, des informations d'opération concernant l'opération à effectuer par le dispositif cible déterminé.

8. Serveur (300) pour commander un dispositif (121, 122, 123), parmi une pluralité de dispositifs (120) dans un environnement de réseau, sur la base d'une entrée vocale, le serveur (300) comprenant :
une interface de communication (302) configurée pour effectuer une communication de données ;
une mémoire (306) stockant un programme comprenant une ou plusieurs instructions ; et
un processeur (304) configuré pour exécuter les une ou plusieurs instructions du programme stockées dans la mémoire (306), pour :
recevoir (S510) une entrée vocale d'un utilisateur depuis au moins un de la pluralité de dispositifs par l'intermédiaire de l'interface de communication ;
exécuter (S520) une reconnaissance automatique de la parole, ASR, pour convertir l'entrée vocale reçue en texte en utilisant un modèle ASR ;
analyser (S530) le texte en utilisant un premier modèle de compréhension du langage naturel, NLU, (300a) ;
déterminer (S530) un type d'au moins un dispositif cible sur la base d'un résultat d'analyse du texte ;
sélectionner (S540), en fonction du type déterminé de dispositif cible, un second modèle NLU (300b) correspondant au type déterminé de l'au moins un dispositif cible, parmi une pluralité de seconds modèles NLU (300b) correspondant respectivement à des types de dispositifs cibles différents et entraînés à analyser du texte lié à différents types de dispositifs cibles ;
analyser (S540) au moins une partie du texte en utilisant le second modèle NLU sélectionné (300b) et obtenir des informations d'opération d'une opération à effectuer par le dispositif cible sur la base d'un résultat d'analyse de la au moins la partie du texte ; et
commander (S550) l'interface de communication pour sortir les informations de fonctionnement obtenues afin de commander le dispositif cible sur la base des informations de fonctionnement obtenues.

9. Le serveur (300) de la revendication 8, dans lequel :
le premier modèle NLU (300a) est un modèle configuré pour analyser le texte afin de déterminer au moins un dispositif cible parmi une pluralité de dispositifs cibles ; et
la pluralité de seconds modèles NLU (300b) sont des modèles configurés pour analyser la au moins la partie du texte pour obtenir des informations d'opération concernant l'opération à effectuer par le au moins un dispositif cible déterminé.

10. Le serveur (300) de la revendication 8, dans lequel le processeur (304) est en outre configuré pour exécuter l'une ou plusieurs instructions pour :
commander l'interface de communication pour recevoir des informations sur les dispositifs de la pluralité de dispositifs à partir d'un serveur cloud IoT ; et
déterminer au moins un dispositif parmi la pluralité de dispositifs comme étant le dispositif cible sur la base des informations de dispositif reçues et du résultat de l'analyse du texte par le premier modèle NLU (300a).

11. Le serveur (300) de la revendication 10, dans lequel le processeur (304) est en outre configuré pour exécuter l'une ou plusieurs instructions pour :
déterminer le type du dispositif cible sur la base de l'analyse du texte en utilisant le premier modèle NLU (300a) ; et
déterminer le dispositif cible sur la base du type déterminé du dispositif cible et des informations de dispositif reçues.

12. Le serveur (300) de la revendication 9, dans lequel :
le premier modèle NLU (300a) est un modèle configuré pour être mis à jour par apprentissage pour déterminer un type d'un nouveau dispositif cible basé sur le nouveau dispositif cible ajouté ; et
la pluralité de seconds modèles NLU (300b) est configurée de telle sorte qu'un nouveau second modèle NLU (300b) correspondant au type du nouveau dispositif cible ajouté est ajouté à la pluralité de seconds modèles NLU (300b), afin d'obtenir des informations d'opération d'une opération à effectuer par le nouveau dispositif cible ajouté.

13. Serveur (300) de la revendication 10, dans lequel le processeur (304) est en outre configuré pour exécuter une ou plusieurs instructions pour déterminer s'il existe une pluralité de candidats de dispositifs cibles sur la base des informations de dispositifs obtenues de la pluralité de dispositifs :
générer, en utilisant un modèle de générateur de langage naturel, NLG, un message de requête pour déterminer le dispositif cible parmi la pluralité déterminée de candidats de dispositif cible ; et
déterminer le dispositif cible sur la base d'une entrée de réponse de l'utilisateur concernant le message d'interrogation généré.

14. Le serveur (300) de la revendication 8, dans lequel le processeur (304) est en outre configuré pour exécuter l'une ou plusieurs instructions pour :
sur la base du résultat de l'analyse du texte par le premier modèle NLU (300a), déterminer le dispositif cible en utilisant un modèle de répartiteur de dispositif ; et
sur la base du résultat de l'analyse de la au moins la partie de texte par le second modèle NLU (300b), obtenir, en utilisant un modèle de gestion de plan d'action, les informations d'opération concernant l'opération à effectuer par le dispositif cible déterminé.

15. Un support d'enregistrement non transitoire lisible par ordinateur sur lequel est enregistré un programme pour exécuter le procédé de la revendication 1 sur un ordinateur.
